(19) Europäisches Patentamt
European Patent Office
Office européen des brevets

(11) EP 2 833 625 A1

(12) EUROPEAN PATENT APPLICATION
published in accordance with Art. 153(4) EPC

(43) Date of publication:
04.02.2015 Bulletin 2015/06

(51) Int Cl.:
H04N 7/173 (2011.01)  H04B 7/26 (2006.01)
H04W 88/12 (2009.01)

(21) Application number: 12872618.9

(22) Date of filing: 28.03.2012

(86) International application number:
PCT/JP2012/058261

(87) International publication number:
WO 2013/145194 (03.10.2013 Gazette 2013/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Fujitsu Limited
Kawasaki-shi, Kanagawa 211-8588 (JP)

(72) Inventors:
• TSUJI Kazutomo
Kawasaki-shi
Kanagawa 211-8588 (JP)

• MURAKAMI Norio
Kawasaki-shi
Kanagawa 211-8588 (JP)

(74) Representative: Wilding, Frances Ward
Haseltine Lake LLP
Lincoln House, 5th Floor
300 High Holborn
London WC1V 7JH (GB)

(54) QUALITY EVALUATION DEVICE, QUALITY EVALUATION METHOD, COMMUNICATION SYSTEM, AND WIRELESS BASE STATION DEVICE

(57) A quality evaluation apparatus for evaluating quality of a picture transmitted from a radio base station apparatus to a terminal apparatus, the apparatus including : a perception quality estimation processing unit configured to estimate the quality of picture viewed at the terminal apparatus based on quality of a radio section between the radio base station apparatus and the terminal apparatus; and a quality evaluation processing unit configured to output an evaluation result evaluated the estimated quality of picture.

FIG. 9

EP 2 833 625 A1

**Description**

TECHNICAL FIELD

The embodiments discussed herein are related to a quality evaluation apparatus, a quality evaluation method, a communication system, and a radio base station apparatus.

BACKGROUND ART

At present, a radio communication system such as a mobile telephone system and a wireless LAN (Local Area Network) is widely in use. In such a radio communication field, continuous discussion is made on a next generation communication technology to further improve communication speed and communication capacity. By this, as compared with the conventional radio communication system, wideband is achieved in the radio communication system and the distribution of content information such as moving picture delivery is expanding.

With regard to the moving picture delivery, quality thereof is estimated in some cases. For example, based on the estimated quality, an information provider or the like that provides content such as a moving picture can create a new service, including the provision of an added value to delivery information and reflection in a fee billing system.

In regard to the quality relative to the moving picture, for example, there is a case that a plurality of viewers (or evaluators) view the moving picture and how the plurality of viewers sense or perceive is monitored (or evaluated). However, it may consume time and cost to monitor a quality result for each individual viewer in some cases.

Also, in regard to the quality of the moving picture, for example, there are provided, as ITU-R recommendations, the subjective evaluation methods for the moving picture, including DSIS (double stimulus impairment scale) and DSCQS (double stimulus continuous quality scale). However, for example, the above subjective evaluation methods are targeted for a television picture etc. in digital television broadcast, and not targeted for the moving picture delivered under a radio communication environment like mobile phone etc. Therefore, there does not be established a method for evaluating and estimating subjective quality that a viewer may bodily sense or perceive on the picture delivered under a radio communication environment like mobile phone etc.

Further, in a standardization organization such as VQEG (Video Quality Experts Group), an objective evaluation method for the moving picture is under study. However, such objective evaluation on the moving picture is still in the stage of discussion at VQEG, and remains in a state of not getting a sufficient result.

Incidentally, as a technique related to a radio communication system such as a mobile phone, there is as follows, for example. Namely, there is a radio system in which one of a radio base station apparatus, a packet control apparatus and a node apparatus actually measures communication quality, and a message is reported to a charging server if a charge currently applied currently applied is different from a charge for the actually measured communication quality, so that the charging server performs charging using the reported communication quality.

CITATION LIST

NON-PATENT DOCUMENT

Non-patent document 1: ITU-T BT500-11 "Methodology for the subjective assessment of the quality of television pictures" (June 7, 2002)

PATENT DOCUMENT

Patent document 1: Japanese Laid-open Patent Publication No. 2006-197421

SUMMARY OF INVENTION

PROBLEMS TO BE SOLVED BY THE INVENTION

However, in regard to the quality evaluation of the moving picture, in a monitoring method by a plurality of viewers, there is a case of a large amount of labor and cost in some cases, as described above. Under a radio communication environment in particular, a terminal such as a mobile phone moves between cells, and it is not realistic to perform monitoring in full consideration of such a situation. Further, in a situation of radio communication being carried out between a terminal and a radio base station etc., when the terminal, the radio base station, etc. perform quality evaluation on the picture, there is also a case that processing related to the radio communication may be affected by the addition of new processing for quality evaluation.

Further, the technique described in the official gazette of the Japanese Laid-open Patent Publication No. 2006-197421 is to perform charging using actually measured communication quality, and in regard to the picture delivered under the environment of radio communication like mobile phone etc., no mention is given about objectively or subjectively evaluating the quality thereof.

Accordingly, it is an object of the present invention to provide a quality evaluation apparatus, a quality evaluation method, a communication system, and a radio base station apparatus, capable of evaluating quality that a viewer may perceive or sense on a picture that is delivered in a radio communication environment without human intervention.

Also, it is another object of the present invention to provide a quality evaluation apparatus, a quality evaluation method, a communication system, and a radio base station apparatus, capable of evaluating such the quality in real time.

Further, it is still another object of the present invention to provide a quality evaluation apparatus, a quality evaluation method, a communication system, and a radio base station apparatus, capable of evaluating quality that a viewer may perceive or bodily sense on a delivered picture, without affecting processing for radio communication.

MEANS FOR SOLVING THE PROBLEMS

According to an aspect of the embodiments, a quality evaluation apparatus for evaluating quality of a picture transmitted from a radio base station apparatus to a terminal apparatus, the apparatus including : a perception quality estimation processing unit configured to estimate the quality of picture viewed at the terminal apparatus based on quality of a radio section between the radio base station apparatus and the terminal apparatus; and a quality evaluation processing unit configured to output an evaluation result evaluated the estimated quality of picture.

ADVANTAGEOUS EFFECTS OF THE INVENTION

According to the present invention, it is possible to provide a quality evaluation apparatus, a quality evaluation method, a communication system, and a radio base station apparatus, capable of evaluating quality that a viewer is supposed to perceive or bodily sense on an picture delivered in a radio communication environment without human intervention.

Also, according to the present invention, it is possible to provide a quality evaluation apparatus, a quality evaluation method, a communication system, and a radio base station apparatus, capable of evaluating such the quality in real time.

Further, according to the present invention, it is possible to provide a quality evaluation apparatus, a quality evaluation method, a communication system, and a radio base station apparatus, capable of evaluating quality that a viewer is supposed to perceive or bodily sense on a delivered picture, without affecting processing for radio communication.

BRIEF DESCRIPTION OF DRAWINGS

FIG. 1 is a diagram illustrating a configuration example of a quality evaluation apparatus.
FIG. 2 is a diagram illustrating a configuration example of the communication system.
Fig. 3 is a diagram illustrating an example of sequence diagram in case of collecting a quality index and performing quality estimation.
Fig.4 is a diagram illustrating an example of sequence diagram in case of collecting a quality index and performing quality evaluation.
Fig.5 is a diagram illustrating configuration examples of a terminal apparatus and radio base station apparatus.
Fig.6 is a diagram illustrating a configuration example of a radio base station apparatus.
Fig.7 is a diagram illustrating a configuration example of a terminal apparatus.
Fig.8 is a diagram illustrating a configuration example of a quality evaluation server.
Fig.9 is a flow chart illustrating an example of quality evaluation process.
Fig.10 is a flow chart illustrating an example of process in a quality evaluation server.
Fig. 11 is a flow chart illustrating an example of process in a quality evaluation server.
Fig.12A is a flow chart illustrating an example of process in a quality evaluation server and Fig.12B is a diagram illustrating an example of quality information DB.
Fig. 13 is a flow chart illustrating an example of process in a quality evaluation server.
Fig.14 is a flow chart illustrating an example of process in a quality evaluation server.
Fig.15 is a flow chart illustrating an example of process in a quality evaluation server.
Fig.16 is a flow chart illustrating an example of process in a quality evaluation server.

Fig. 17 is a flow chart illustrating an example of process in a quality evaluation server.

Fig.18 is a graph illustrating a distribution example of power control displacement.

Fig.19A is a graph illustrating an example of power control displacement, and Fig.19B is a graph illustrating an example of normal distribution of power control displacement.

Fig.20 is a graph illustrating an example of Asymmetric Tracking Model.

Fig.21 is a diagram used in case that perceptual or sensory quality is estimated.

Fig.22A to Fig. 22C are graphs illustrating distribution examples of radio quality index.

Fig.23 is a diagram illustrating an example of weighting.

Fig.24 is a diagram illustrating an example of perceptual or sensory quality evaluation value.

Fig.25 is a diagram illustrating a configuration example of a communication system.

Fig.26 is a diagram illustrating a configuration example of a quality evaluation server and illustrating an operation example of process performed by the quality evaluation server.

Fig.27 is a diagram illustrating a configuration example of a communication system.

Fig.28 is a diagram illustrating a configuration example of a radio base station apparatus.

Fig.29A is a flow chart illustrating an example of process in a radio base station apparatus, and Fig.29B to Fig.29C are diagrams illustrating allocation examples of radio resource.

Fig.30 is a diagram illustrating a configuration example of a radio base station apparatus.

Fig.31 is a diagram illustrating a configuration example of a radio base station apparatus.

Fig.32 is a diagram illustrating a configuration example of a radio base station apparatus.

Fig.33 is a diagram illustrating a configuration example of a terminal apparatus.

Fig. 34 is a diagram illustrating a configuration example of a quality evaluation server.

## DESCRIPTION OF EMBODIMENTS

Hereafter, the explanation of the present embodiments will be given in detail by reference to the drawings.

[First embodiment]

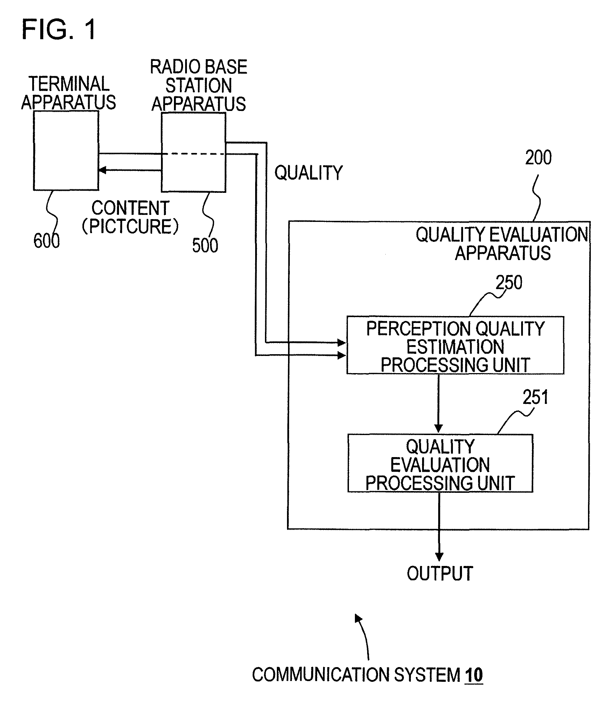

First, explanation is given on a first embodiment. FIG. 1 is a diagram illustrating a configuration example of a communication system 10 according to the first embodiment.

The communication system 10 includes a radio base station apparatus 500, a terminal apparatus 600, and a quality evaluation apparatus 200.

The radio base station apparatus 500 and the terminal apparatus 600 can perform radio communication, and the radio base station apparatus 500 transmits a content picture (for example, picture signal or picture data) to the terminal apparatus 600.

The quality evaluation apparatus 200 collects from the radio base station apparatus 500 quality of a radio section between the radio base station apparatus 500 and the terminal apparatus 600. Also, the quality evaluation apparatus 200 collects from the terminal apparatus 600 via the radio base station apparatus 500 the quality of the radio section between the radio base station apparatus 500 and the terminal apparatus 600.

The quality evaluation apparatus 200 includes a perception quality estimation processing unit 250 and a quality evaluation processing unit 251.

The perception quality estimation processing unit 250 estimates quality of an picture viewed at the terminal apparatus 600 based on the collected quality of the radio channel between the radio base station apparatus 500 and the terminal apparatus 600.

The quality evaluation processing unit 251 evaluates the estimated quality of the picture in the perception quality estimation processing unit 250, and outputs the evaluation result.

As such, since the quality evaluation apparatus 200 estimates and evaluates the quality of the picture viewed at the terminal apparatus 600 based on the quality of the radio section, it is possible to evaluate without human intervention picture quality that the viewer probably perceive or sense.

Also, the quality evaluation apparatus 200 estimates and evaluates the quality that the viewer probably perceive or sense based on the quality of the radio section between the radio base station apparatus 500 and the terminal apparatus 600. Accordingly, the quality evaluation apparatus 200 collects in real time the quality of the radio section from the radio base station apparatus 500 and the terminal apparatus 600, so that can evaluate in real time the quality that the viewer probably perceive or sense.

Further, the quality evaluation apparatus 200 estimates and evaluates the quality that the viewer probably perceive or sense based on the quality of the radio section between the radio base station apparatus 500 and the terminal apparatus 600. Accordingly, the quality evaluation apparatus 200 can estimate and evaluate the quality that the viewer probably perceive or sense, without affecting processing related to radio communication in the radio base station apparatus 500 and the terminal apparatus 600.

[Second embodiment]

Next, explanation will be given on a second embodiment. In the second embodiment, the explanation will be given according to the following items and the sequence.

<1 Concerning communication system>

<1.1 Overall configuration example of communication system>
<1.2 Operation example in communication system>

<2 Configuration example of each apparatus>

<2.1 Configuration example of radio base station apparatus>
<2.2 Configuration example of terminal apparatus>
<2.3 Configuration example of quality evaluation server>

<3 Estimation processing and evaluation processing of perceptual or sensory quality>

<3.1 Typical example of estimation processing of perceptual or sensory quality>
<3.2 Example of evaluation processing of perceptual or sensory quality in quality evaluation server>

<4 Concerning application using perceptual or sensory quality>

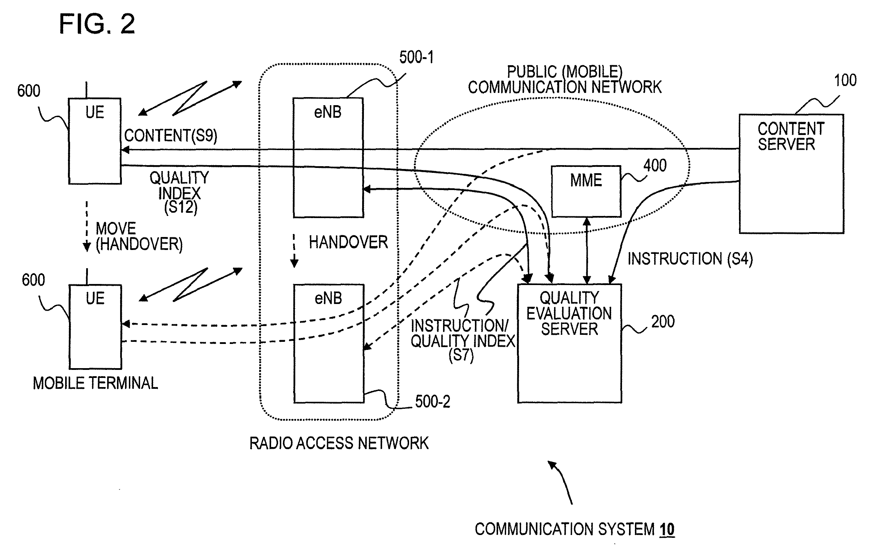

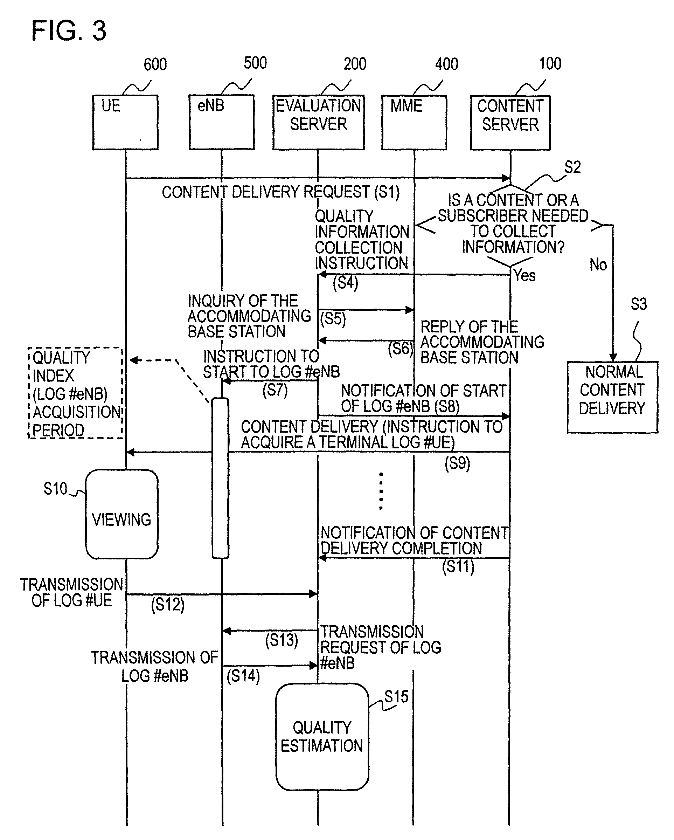

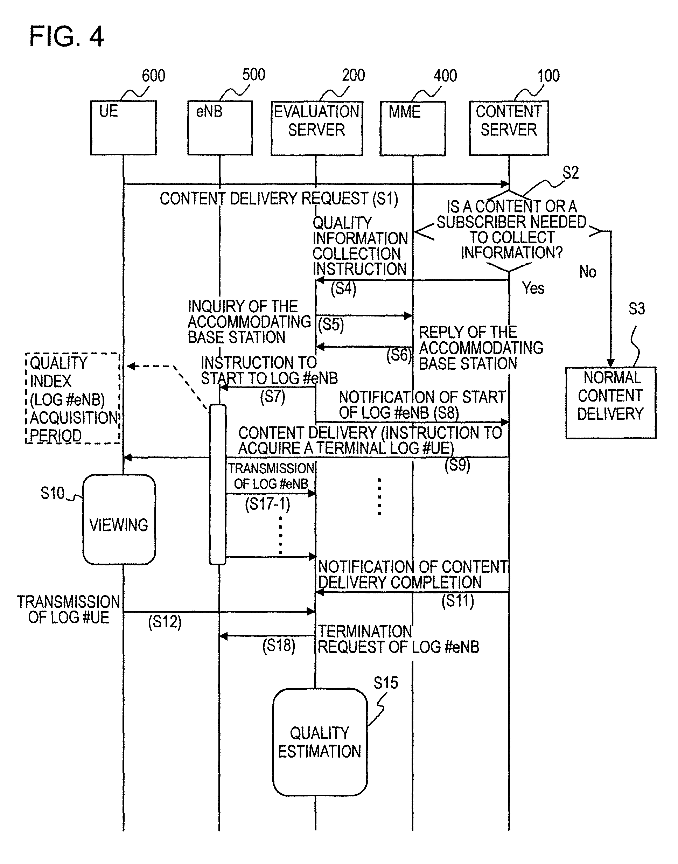

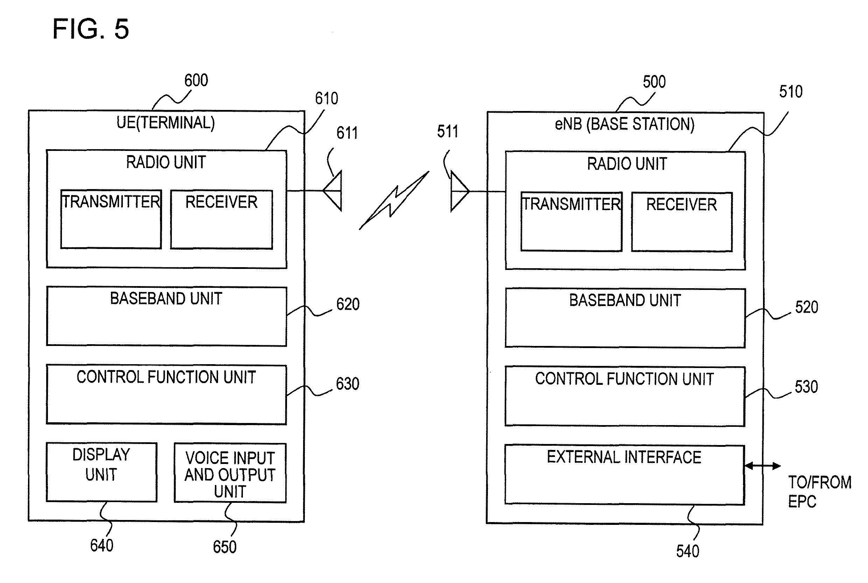

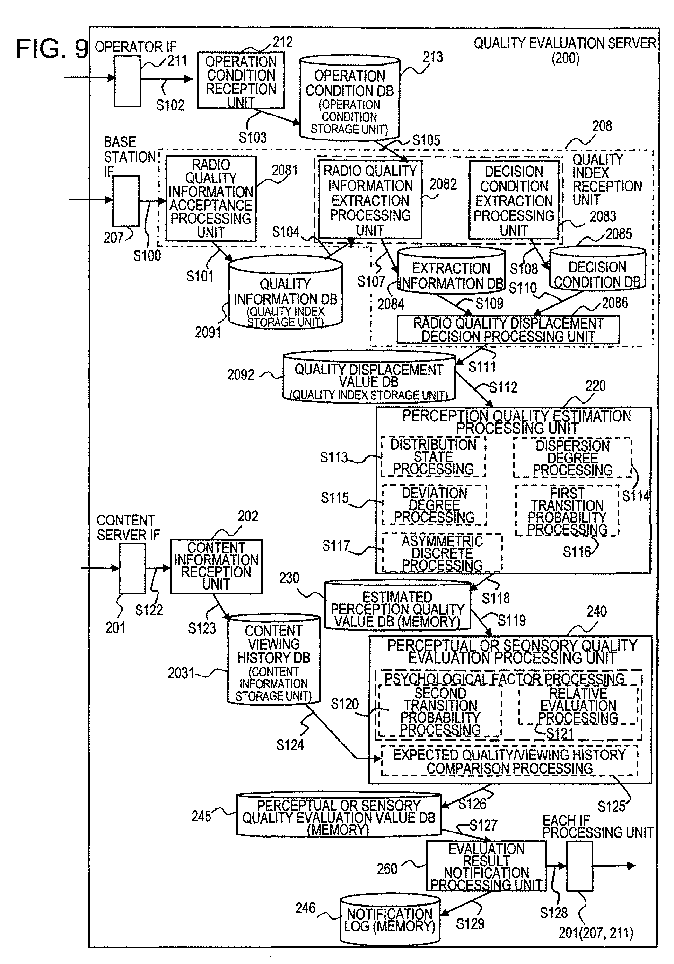

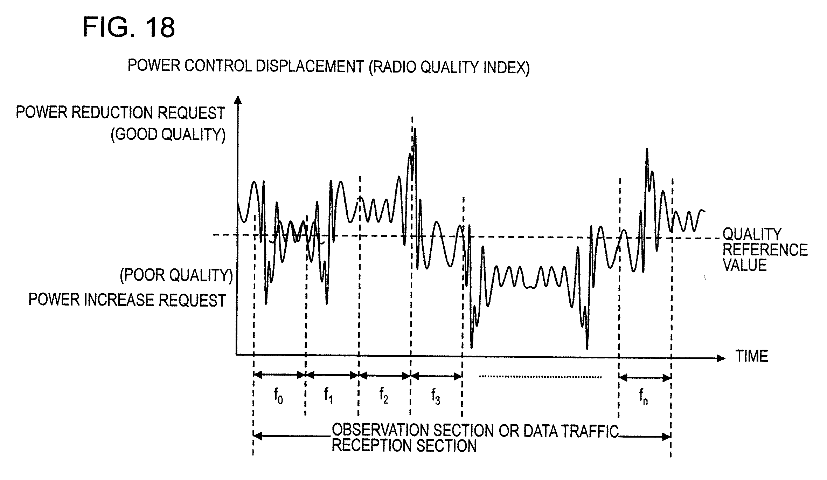

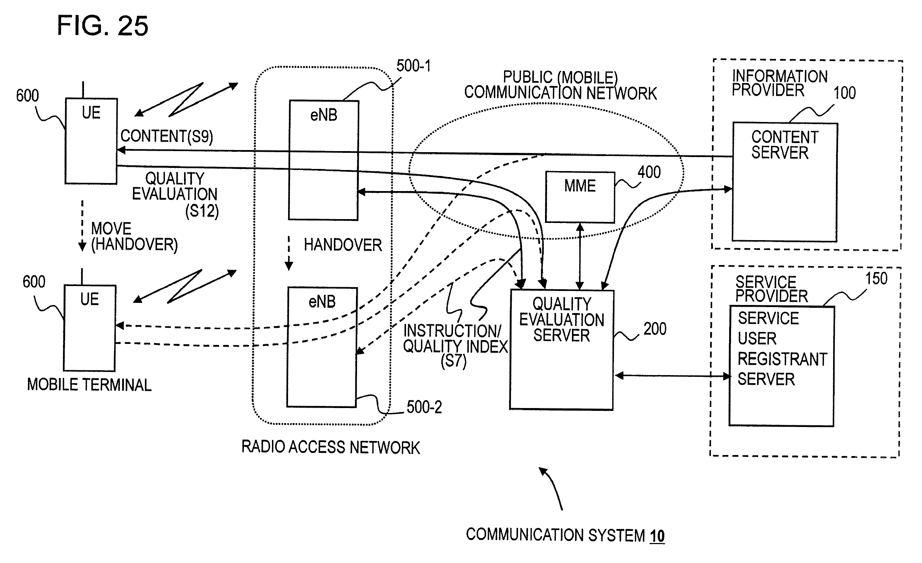

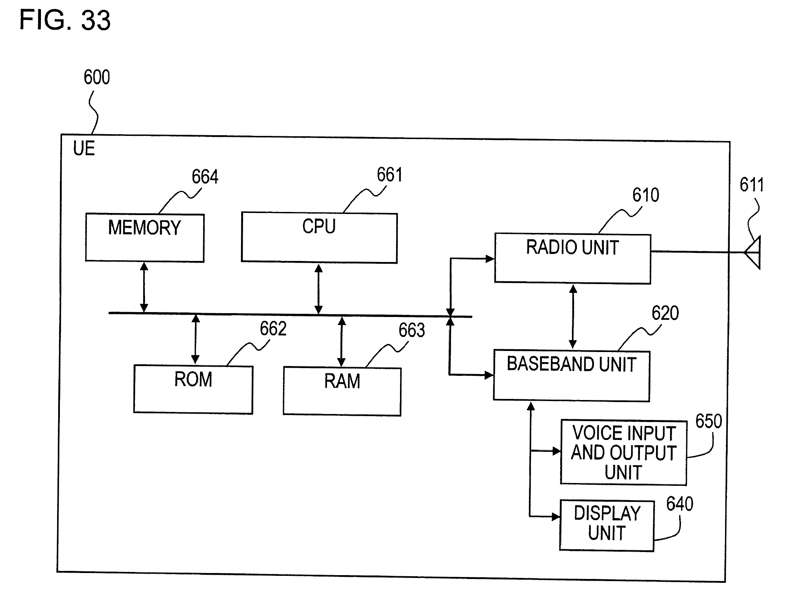

First, as to the overall configuration example of a communication system in the present second embodiment, an explanation is given in <1.1 Overall configuration example of communication system>, and subsequently, as to the operation example in the overall communication system, an explanation is given in <1.2 Operation example in communication system>. FIG. 2 illustrates the overall configuration example of the communication system 10, and FIG. 3 and FIG. 4 illustrate the examples of sequence charts respectively illustrating the operation examples in the overall communication system 10.
Next, as to the configuration examples of a radio base station apparatus, a terminal apparatus, and a quality evaluation server 200 included in the communication system 10, an explanation is given in <2 Configuration example of each apparatus>. FIG. 5 through FIG. 8 are diagrams illustrating each configuration example of the radio base station apparatus, the terminal apparatus, and the quality evaluation server 200.
Also, as to estimation processing and evaluation processing of perceptual or sensory quality performed in the quality evaluation server 200, an explanation is given in <3 Estimation processing and evaluation processing of perceptual or sensory quality>. Here, an example of the estimation processing of perceptual or sensory quality and a typical example of the estimation processing, and further, an example of the evaluation processing of the perceptual or sensory quality will be explained respectively. FIG. 9 through FIG. 17 illustrate the operation examples of the perceptual or sensory quality estimation processing, and FIG. 18 through FIG. 23 illustrate typical examples of the perceptual or sensory quality estimation processing, respectively.
Here, for example, the perceptual or sensory quality is a quality sensed by a viewer when the viewer views the delivered picture. For example, it is thought that such perceptual or sensory quality is deteriorated when a frame skip or the picture defect occurs in the viewing picture. In and after the present second embodiment, there is provided a method for estimating and evaluating such perceptual or sensory quality in the quality evaluation server 200, for example.
Also, for example, a radio quality index is an index to be applied when the perceptual or sensory quality is estimated and evaluated, and an information indicative of quality of a radio section between the terminal apparatus and the radio base station apparatus. As examples of the radio quality index, there are reception power, a frame loss rate, a number of times of retransmission, a number of times of handover, a packet delay time, a number of times of packet that could not be relieved by retransmission control, etc., for example. The radio quality index can be measured in the terminal apparatus and the radio base station apparatus. Additionally, in the following explanations, the radio quality index may be referred to as a quality index in some cases.
Finally, as to an application example using the perceptual or sensory quality, an explanation is given in <4 Concerning application using perceptual or sensory quality>. Here, the explanation is given on the example of an application in regard to how to allocate a radio resource and how to apply to a charge based on the evaluated perceptual or sensory quality, for example. FIG. 25 through FIG. 33 are diagrams respectively illustrating operation examples etc. of the application using such perceptual or sensory quality.

<Concerning communication system 10>

<1.1 Overall configuration example of communication system 10>

First, an explanation is given on the overall configuration example of the communication system 10 according to the second embodiment. FIG. 2 is a diagram illustrating a configuration example of the communication system 10.

The communication system 10 includes a content server 100, a quality evaluation server 200, an MME (Mobility Management Entity) 400, a radio base station apparatus (eNB: evolved Node, hereinafter referred to as "base station" in some cases) 500, and a terminal apparatus (UE: User Equipment, which is hereinafter referred to as "terminal" in some cases) 600.

Here, in the example illustrated in FIG. 2, the base station 500, the quality evaluation server 200, the MME 400, and the content server 100 are interconnected through a public (mobile) communication network. Also, in the example of FIG. 2, there is illustrated an example that the terminal 600 performs handover, and in this case, the terminal 600 can continuously receive the provision of a content if the connected base station 500 is changed due to the handover.

Also, the quality evaluation apparatus 200 in the first embodiment corresponds to the quality evaluation server 200 in the second embodiment, for example. Further, the radio base station apparatus 500 and the terminal apparatus 600 in the first embodiment respectively correspond to the base station 500 and the terminal 600 in the second embodiment, for example.

The content server 100 delivers the content to the terminal 600 via the public communication network and the base station 500, for example. For this purpose, the content server 100 may include a memory apparatus like a hard disk etc. so as to store the content.

Additionally, although the picture and voice may be included as the content to be delivered, the content targeted for the perceptual or sensory quality is the picture, for example. Here, the picture targeted for the perceptual or sensory quality may be either a moving picture or a still picture. In the content to be delivered, an picture signal (or a video signal) and an audio signal are included, for example.

The quality evaluation server 200 collects the quality index measured in the base station 500 or the terminal 600, and estimates the perceptual or sensory quality that the viewer probably perceive or sense on the delivered picture, for example. Then, the quality evaluation server 200 evaluates the estimated perceptual or sensory quality based on a viewing history etc., for example.

The base station 500 can perform radio communication with the terminal 600, and converts a content delivered by the content server 100 into a radio signal to transmit to the terminal 600, or receives the radio signal from the terminal 600 to extract the quality index from the received radio signal, for example. For this purpose, the base station 500 may also include an error correction coding processing unit, an error correction coding processing unit, a modulation processing unit, a demodulation processing unit, a frequency conversion processing unit, or a band pass filter, etc. Also, the base station 500 can measure the quality index relative to the content delivered through a radio channel between with the terminal 600. The base station 500 can transmit the measured quality index to the quality evaluation server 200. Although two base stations 500-1, 500-2 are illustrated in the example of FIG. 2, the number may be, for example, one, three or more.

The terminal 600 may be, for example, a feature phone such as a mobile phone, a smart phone, or the like. The terminal 600 also measures the quality index relative to the content delivered through the radio channel between with the base station 500, to transmit the measured quality index to the quality evaluation server 200 via the base station 500. The terminal 600 also can convert the radio signal into the content to display the content on a monitor etc., or can convert the measured quality index into the radio signal. To perform such conversion, the terminal 600 may also include an error correction coding processing unit, an error correction coding processing unit, a modulation processing unit, a demodulation processing unit, a frequency conversion processing unit, or a band pass filter, etc. Additionally, as illustrated in FIG. 2, if the connected base station 500 is changed by handover, the terminal 600 can measure the quality index and transmit the measured quality index to the quality evaluation server 200 via the changed base station 500.

<1.2 Operation example in communication system 10>

Next, an explanation is given on an operation example in the communication system 10. In the present operation example, mainly measurement of the quality index and collection of the measured quality index will be explained. After the collection, processing such as the evaluation of perceptual or sensory quality is performed, and the processing thereof will be explained in <3 Estimation processing and evaluation processing of perceptual or sensory quality>.

Fig. 3 and FIG. 4 are flowcharts respectively illustrating such operation examples in the communication system 10. Here, FIG. 3 is an example of aggregating each quality index measured by the base station 500 and transmitting to the quality evaluation server 200 (S14), and FIG. 4 is an example of transmitting each quality index measured by the base station 500 successively to the quality evaluation server 200 (S17-1 to S17-n). In FIG. 3, the quality index is transmitted as batch processing, and in FIG. 4, the quality index is transmitted in real time.

First, an explanation is given by use of FIG. 3. The terminal 600 transmits a content delivery request after the terminal 600 performs radio connection to the base station 500 (S1). For example, the terminal 600 transmits the content delivery request by adding a user ID (or subscriber ID) and a content ID of which delivery reception is desired, in regard to the content delivery request. The content delivery request is transmitted to the content server 100 via radio connected base station 500, or a public communication network, etc.

On receiving the content delivery request, the content server 100 determines whether or not the content to be delivered is a specific content for which the quality index is to be corrected, or whether or not the user of a delivery destination is a specific subscriber for which the quality index is to be corrected (S2). For example, the content server 100 can determine based on whether or not the content ID or the user ID added to the content delivery request is the ID of the specific content or the ID of the specific subscriber, respectively.

If the content to be delivered is a content for which the quality index is not to be corrected, or if the delivery destination user is the subscriber for which the quality index is not to be corrected (No in S2), the content server 100 performs ordinary content delivery (S3). The reason is that the perceptual or sensory quality is may not evaluate for such the content and a user.

On the other hand, if the content to be delivered is the content for which the quality index is to be collected, or if the delivery destination user is the subscriber for which the quality index is to be collected (Yes in S2), the content server 100 generates a quality information collection instruction and transmits to the quality evaluation server 200 (S4).

The quality evaluation server 200, on receiving the quality information collection instruction, inquires of the MME 400 which the base station 500 is a base station 500 that accommodates the terminal 600 of the content delivery destination (S5). For the above purpose, for example, the user ID transmitted from the terminal 600 may be added in regard to the quality information collection instruction and the inquiry to the base station 500.

The MME 400, on receiving the inquiry about an accommodating base station 500, replies which the base station 500 is a base station 500 that accommodates the terminal 600 (S6). For example, when the terminal 600 performs radio connection to the base station 500, the MME 400 receives the user ID and the ID of the base station 500 from the base station 500, so that the MME 400 can perform position registration. Based on the information retained at the position registration, the MME 400 can reply which base station 500 is a base station 500 that accommodates the terminal 600.

On receiving the reply, the quality evaluation server 200 transmits a start instruction to the accommodating base station 500 to collect a log of the quality index (S7). On receiving the start instruction, the base station 500 can measure the quality index relative to the content in the radio section between with the terminal 600.

Then, the quality evaluation server 200 notifies the content server 100 start of quality index collection in the accommodating base station 500 (S8). By the above notification, for example, the quality evaluation server 200 can notify to the content server 100 that the preparation of measuring the quality index is completed in the accommodating base station 500.

On receiving the notification of the start of quality index collection, the content server 100 delivers the content (S9). At this time, the content server 100 can transmit an acquisition instruction instructing to acquire the quality index, together with the content to be delivered. By the above acquisition instruction, the terminal 600 can measure the quality index in the radio section with the base station 500. Here, the content and the acquisition instruction are transmitted from the content server 100 to the terminal 600 via the base station 500.

The terminal 600 receives the delivered content and the user views the content through a monitor of the terminal 600 and so on (S10). At this time, the terminal 600 can receive the acquisition instruction from the content server 100, and measures the quality index related to the delivered content based on the acquisition instruction.

When the content server 100 completes the content delivery, the content server 100 transmits a content delivery completion notification to the quality evaluation server 200 (S11). By this, for example, the quality evaluation server 200 can recognize that the delivery of the content is completed.

Further, when the content viewing is completed in the terminal 600, the terminal 600 transmits the measured quality index to the quality evaluation server 200 (S12). By this, the quality evaluation server 200 can collect each quality index in the radio section measured by the terminal 600.

On acquiring the quality index measured by the terminal 600, the quality evaluation server 200 requests the base station 500 to transmit the quality index acquired by the base station 500 (S13).

On receipt of the request, the base station 500 transmits the quality index measured by the base station 500 to the quality evaluation server 200 (S14). By this, the quality evaluation server 200 can collect each quality index measured by the base station 500.

Then, based on each quality index measured by the terminal 600 and the base station 500, the quality evaluation server 200 can estimate the perceptual or sensory quality (S15).

Here, in the example of FIG. 3, although the processing S13 follows S12, it may also be possible that, on receiving the content delivery completion notification (S11), for example, the quality evaluation server 200 requests the transmission of the quality index measured at the base station 500 (S13), without waiting for the reception of the quality index measured at the terminal 600 (S12).

Similar to FIG. 3, FIG. 4 illustrates an operation example in the communication system 10, which is an example of transmitting the quality index in real time to the quality evaluation server 200 when the quality index is measured (S17-1 to S17-n (where n is an integer of 2 or greater)). In both the examples of FIG. 3 and FIG. 4, it is the same that the quality evaluation server 200 collects the quality index measured by the base station 500.

In FIG. 4, the quality evaluation server 200 acquires the quality index from the base station 500 (S17-1 to S17-n), and on receiving the content delivery completion notification from the content server 100 (S11), the quality evaluation server 200 instructs the base station 500 to stop the measurement of quality index (S18). Since the base station 500 transmits in real time the measured quality index to the quality evaluation server 200, the base station 500 can terminate quality index measurement by the instruction from the quality evaluation server 200 to terminate quality index measurement.

Regarding acquisition period of the quality index at the base station 500, it can starts after receiving the start instruction from the quality evaluation server 200 (S7) and before the content is delivered (S9), similar to FIG. 3, for example.

As such, for example, by the processing illustrated in FIG. 3 or FIG. 4, the quality evaluation server 200 can acquire the measured quality index from the terminal 600 or the base station 500.

<2 Configuration example of each apparatus>

Next, an explanation is given on each configuration example of the quality evaluation server 200, the base station 500, and the terminal 600. Here, for example, the content server 100 and the MME 400 may be a content server 100 and an MME 400 that are known to the public, and therefore, the explanation of the configuration examples thereof is omitted. As an explanation sequence, the explanation is given on the configuration examples of the base station 500 first, followed by the terminal 600, and lastly the quality evaluation server 200.

<2.1 Configuration example of radio base station apparatus>

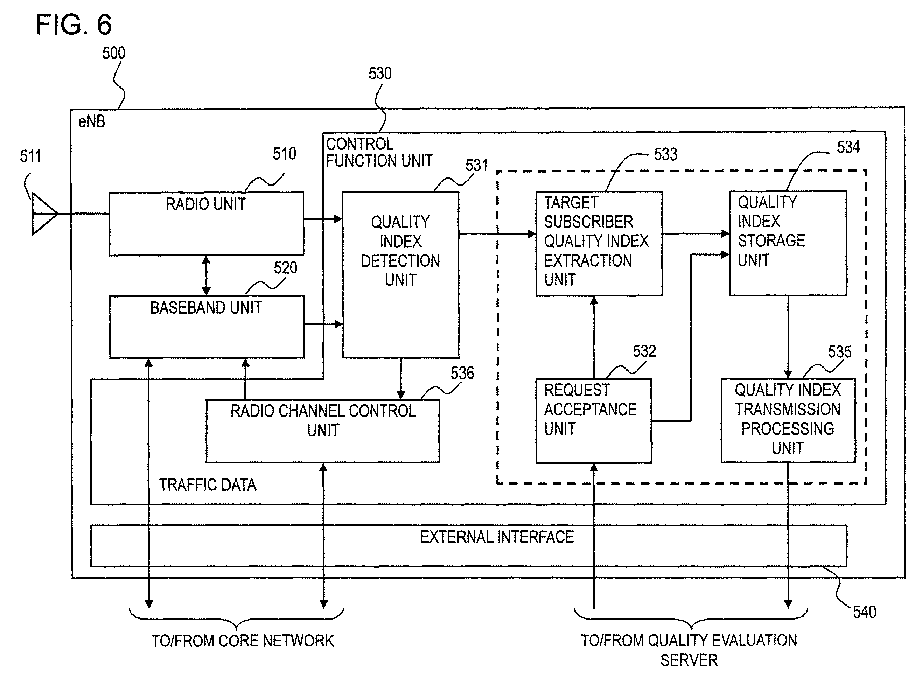

FIG. 5 is a diagram illustrating a configuration example of the terminal 600 and the base station 500, and FIG. 6 illustrates a configuration example of the base station 500, respectively.

As illustrated in FIG. 5 and FIG. 6, the base station 500 includes an antenna 511, a radio unit 510, a baseband unit 520, a control function unit 530, and an external interface 540. The control function unit 530 includes a quality index detection unit 531, a request acceptance unit 532, a target subscriber quality index extraction unit 533, a quality index storage unit 534, a quality index transmission processing unit 535, and a radio channel control unit 536.

The radio unit 510 performs processing such as frequency conversion (down-conversion) on a radio signal received by the antenna 511, to convert into a baseband signal and output the converted baseband signal to the baseband unit 520. Also, the radio unit 510 performs frequency conversion (up-conversion) the baseband signal output from the baseband unit 520 into the radio signal and transmits the radio signal to the terminal 600 via the antenna. To perform such frequency conversion, the radio unit 510 may include a frequency conversion circuit or the like, for example. Incidentally, the radio unit 510 can also increase or decrease transmission power of the radio signal to be transmitted from the antenna, based on an instruction from the radio channel control unit 536 via the baseband 520.

The baseband unit 520 performs error correction decoding processing, demodulation processing , and so on, on the baseband signal output from the radio unit 510, and extracts user data and so on. Further the baseband unit 520 performs error correction coding processing, modulation processing, and so on, on the user data and so on, input from the external interface 540, converts into the baseband signal, and outputs to the radio unit 510.

The quality index detection unit 531 measures the quality index based on the outputs of the radio unit 510 and the baseband unit 520. For example, the quality index detection unit 531 measures the power level of the radio signal output from the radio unit 510, so that can measure the reception power level of the radio signal received in the base station 500, as the quality index. Also, based on a reception packet output from the baseband unit 520, the quality index detection unit 510 can detect, as the quality index, the packet loss rate of the reception packet received in the base station 500. In this case, for example, since the baseband unit 520 can acquire a reception packet number from the reception packet, the quality index detection unit 531 receives the above number from the baseband unit 520 and can detect the packet loss rate from the number of lost packets. Also, since the radio channel control unit 536 performs a control of retransmission control, handover control, or the like, the quality index detection unit 531 can receive the number of times of retransmission, handover, or the like, from the radio channel control unit 536, and can also detect the above numbers as the quality index. The quality index detection unit 531 outputs the detected quality index to the target subscriber quality index extraction unit 533.

Here, the quality index detection unit 531 can detect a certain specific quality index (for example, reception power level), and can also detect a plurality of quality indexes (for example, reception power level and packet loss rate) or all quality indexes that can be measured. Accordingly, the quality index detection unit 531 can detect the quality index based on either one output among each output of the radio unit 510, the baseband unit 520, and the radio channel control unit 536, or the combination of the above outputs or all outputs.

Further, as the quality index detected in the quality index detection unit 531, for example, any information indicative of the quality of the radio section between the terminal 600 and the base station 500 may be applicable, and each of the reception power level, the packet loss rate, and the number of times of retransmission and handover is an example thereof.

The request acceptance unit 532 receives from the quality evaluation server 200 the information of a target subscriber (for example, user ID and subscriber ID) which is a target for acquiring quality index, with the quality index acquisition start instruction (for example, S7 in FIG. 3). Then, the request acceptance unit 532 instructs the target subscriber quality index extraction processing unit to start quality index extraction processing for the target subscriber.

The target subscriber quality index extraction unit 533 extracts the quality index corresponding to the target subscriber instructed from the request acceptance unit 532, to the quality index detected in the quality index detection unit 531, on receiving the start instruction of quality index extraction processing from the request acceptance unit 532. For example, the start instruction of quality index extraction processing output from the request acceptance unit 532 includes the information of the target subscriber. Also, the quality index detected in the quality index includes information indicating which subscriber relates to the quality index is included. The target subscriber quality index extraction unit 533 extracts the quality index in which both of the above information match, and outputs the extracted quality index to the quality index storage unit 534.

The quality index storage unit 534 stores the quality index of the target subscriber. Also, the quality index storage unit 534 outputs the stored quality index to the quality index transmission processing unit 535 on receiving the transmission request from the request acceptance unit 532 (for example, S13 in FIG. 3). Here, when the base station 500 transmits to the quality evaluation server 200 the quality index in real time (for example, FIG. 4), there is no transmission request from the request acceptance unit 532, and the quality index storage unit 534 outputs stored quality index successively to the quality index transmission processing unit 535.

The quality index transmission processing unit 535 transmits the quality index received from the quality index storage unit 534 to the quality evaluation server 200 via the external interface 540

The radio channel control unit 536 performs control in relation to the radio channel with the terminal 600, and performs transmission power control, retransmission control, control related to handover, or the like. The radio channel control unit 536 can also perform scheduling on which radio resource is to be used for the terminal 600 (or user). Further, the radio channel control unit 536 can instruct the baseband unit 520 and the radio unit 510 to increase or decrease transmission power on transmitting the user data to the terminal 600, to perform user data retransmission instruction, to transmit the scheduling result, or the like, for example.

Additionally, since the radio channel control unit 536 performs transmission power control or the like based on the reception power level or the like on performing transmission power control or the like, the radio channel control unit 536 can also receive from the quality index detection unit 531 the quality index such as the reception power level or the like measured by the quality index detection unit 531.

The external interface 540 converts data or the like transmitted and received between the quality evaluation server 200 or the public communication network and the base station 500 into a data format that can be transmitted to the quality evaluation server 200 or the public communication network. Further, the external interface 540 converts data or the like received from the quality evaluation server 200 or the public communication network into the data format capable of processing by the base station 500.

As such, the base station 500 receives in the request acceptance unit 532 a start instruction from the quality evaluation server 200 (for example, S7 in FIG. 3), so that can extract in the target subscriber quality index extraction unit 533 a quality index of the target subscriber. Then, the base station 500 receives in the request acceptance unit 532 an acquisition instruction etc. from the quality evaluation server 200 (for example, S13 in FIG. 3), so that can transmit the quality index stored in the quality index storage unit 534 to the quality evaluation server 200.

<2.2 Configuration example of terminal apparatus>

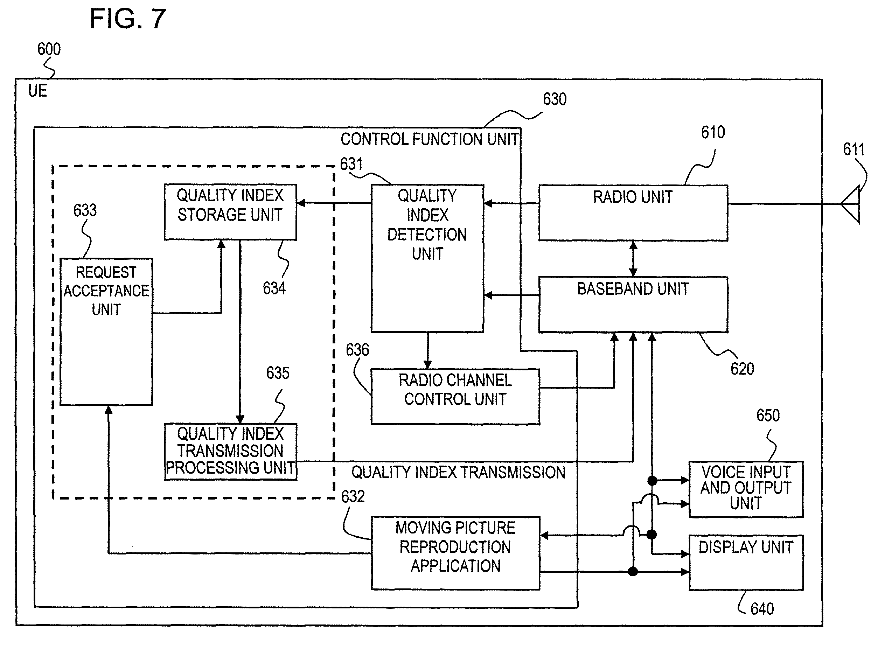

Next, the configuration example of the terminal 600 is explained. FIG. 5 and FIG. 7 are diagrams illustrating configuration examples of the terminal 600. The terminal 600 includes a radio unit 610, an antenna 611, a baseband unit 620, a control function unit 630, a display unit 640, and a voice input and output unit 650. Further, the control function unit 630 includes a quality index detection unit 631, a moving picture reproduction application 632, a request acceptance unit 633, a quality index storage unit 634, a quality index transmission processing unit 635, and a radio channel control unit 636.

The radio unit 610 performs frequency conversion processing (down conversion) on the radio signal received by the antenna to convert into the baseband signal, and outputs the converted baseband signal to the baseband unit 620. Also, the radio unit 610 performs frequency conversion processing (up conversion) on the baseband signal being output from the baseband unit 620, to transmit through the antenna to the base station 500. The radio unit 610 may include a frequency conversion circuit and so on, so that can perform such conversion processing.

The baseband unit 620 performs demodulation processing, error correction decoding processing, and so on, on the baseband signal output from the radio unit 610, and extracts the user data or the like, transmitted from the base station 500. Among the extracted user data and so on, the baseband unit 620 can output moving picture data to the moving picture reproduction application 632 and the display unit 640, and also voice data to the voice input and output unit 650, respectively. Further, the baseband unit 620 performs error correction coding processing and modulation processing on the user data, such as the moving picture data and the voice data being output from the moving picture reproduction application 632, the voice input and output unit 650, the display unit 640, or the like, and outputs to the radio unit 610 as the baseband signal. The baseband unit 620 can perform error correction coding processing and so on, also on the quality index being output from the quality index transmission processing unit 635, and outputs to the radio unit 610 as the baseband signal.

Based on the output from the radio unit 610 and the baseband unit 620, the quality index detection unit 631 detects the quality index. For example, the quality index detection unit 631 measures the power level of the radio signal output from the radio unit 610, so that can measure the reception power level of the radio signal received in the terminal 600. Also, based on each reception packet output from the baseband unit 620, the quality index detection unit 631 can detect the packet loss rate or the like, of the reception packet received in the terminal 600. In this case, for example, since the baseband unit 620 can acquire the reception packet number from the reception packet, the quality index detection unit 631 receives the above number from the baseband unit 620, so that can detect the packet loss rate from the number of lost packets. The quality index detection unit 631 outputs the detected quality index to the quality index storage unit 634.

Here, the quality index detection unit 631 can detect a certain specific quality index (for example, reception power level), and can also detect a plurality of quality indexes (reception power level and packet loss rate, and the like) or all quality indexes that can be measured. For that purpose, the quality index detection unit 631 can use one of each output of the radio unit 610 and the baseband unit 620, or both outputs.

The moving picture reproduction application 632 reproduces the moving picture data output from the baseband unit 620. By this, for example, the terminal 600 can reproduce the content delivered from the content server 100. For example, when the moving picture data is compressed and encoded, the moving picture reproduction application 632 can reproduce the moving picture by performing decompression processing and so on.

Additionally, if the acquisition instruction of quality index is included in moving picture data transmitted from the content server 100 (for example, S9 in FIG. 3), the moving picture reproduction application 632 extracts the acquisition instruction and outputs the extracted acquisition instruction to the request acceptance unit 633. Further, on completion of moving picture data reproduction, the moving picture reproduction application 632 notifies the completion to the request acceptance unit 633.

The request acceptance unit 633, on receiving the quality index acquisition instruction from the moving picture reproduction application 632, requests the quality index storage unit 634 to start acquiring the quality index so as to store the quality index detected in the quality index detection unit 631. By this, for example, in response to the quality index acquisition instruction from the content server 100, the terminal 600 can acquire the quality index relative to the content. Further, on receiving the notification of the completion of moving picture reproduction, the request acceptance unit 633 instructs the quality index storage unit 634 and outputs the stored quality index to the quality index transmission processing unit 635.

On receiving the start of quality index acquisition from the request acceptance unit 633, the quality index storage unit 634 stores the quality index detected in the quality index detection unit 631. Also, on receiving the notification of the reproduction completion of the moving picture data from the request acceptance unit 633, the quality index storage unit 634 outputs the stored quality index to the quality index transmission processing unit 635.

On receiving the quality index from the quality index storage unit 634, the quality index transmission processing unit 635 transmits the quality index to the base station 500 via the baseband unit 620, the radio unit 610, and so on. The quality index is appropriately converted into the radio signal, and transmitted to the base station 500.

The radio channel control unit 636 performs control related to the radio channel between the terminal 600 and the base station 500. For example, based on the reception power level detected in the quality index detection unit 631, the radio channel control unit 636 can instruct the baseband unit 620 and the radio unit 610 to increase or decrease the transmission power level of the radio signal to be transmitted from the terminal 600.

The display unit 640 is, for example, the display unit 640 based on a liquid crystal method and an organic EL (Electro-Luminescence) method, and can display a text and the moving picture that are output from the baseband unit 620 and the moving picture reproduction application 632.

The voice input and output unit 650 outputs voice corresponding to audio data output from the baseband unit 620, and inputs voice by a user to output to the baseband unit 620, as the audio data.

As such, for example, in the terminal 600 also, it is possible to receive the quality index acquisition request from the content server 100 in the request acceptance unit 633 via the moving picture reproduction application 632 (for example, S9 in FIG. 3), to thereby detect or measure the quality index relative to the content. Further, on completion of content reproduction, the terminal 600 can transmit the quality index stored in the quality index storage unit 634 to the base station 500 (for example, S12 in FIG. 3).

<2.3 Configuration example of quality evaluation server 200>

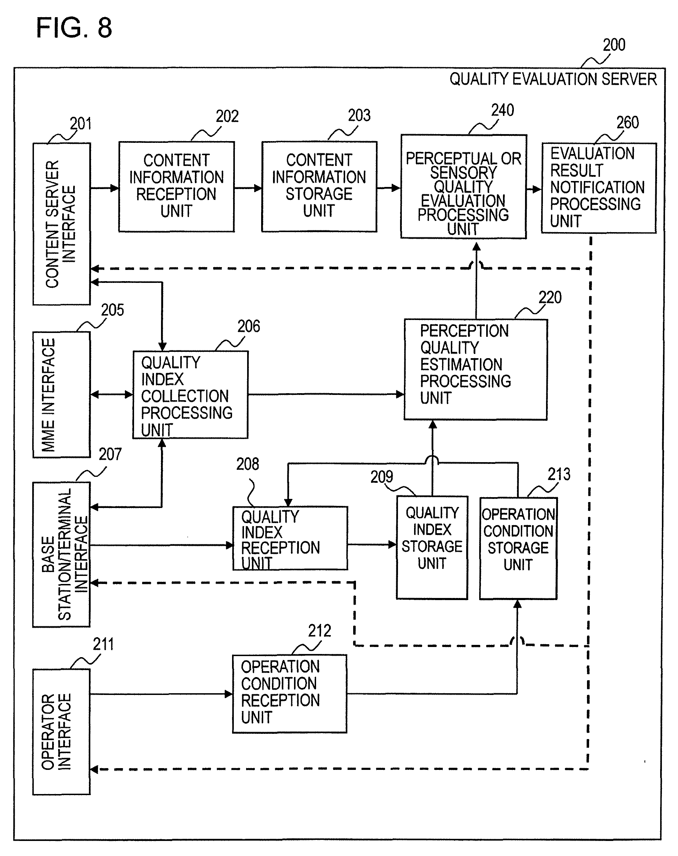

Next, an explanation is given on a configuration example of the quality evaluation server 200. FIG. 8 is a diagram illustrating the configuration example of the quality evaluation server 200. The quality evaluation server 200 collects the quality index acquired by the base station 500 or the terminal 600, and analyzes feature of the quality index to the collected quality index, can estimate, and also evaluate, the perceptual or sensory quality to the analysis result.

The quality evaluation server 200 includes a content server interface 201, a content information reception unit 202, a content information storage unit 203, an MME interface 205, a quality index collection processing unit 206, a base station/terminal interface 207, a quality index reception unit 208, a quality index storage unit 209, an operator interface 211, an operation condition reception unit 212, and an operation condition storage unit 213. The quality evaluation server 200 further includes a perception quality estimation processing unit 220, a perceptual or sensory quality evaluation processing unit 240 and an evaluation result notification processing unit 260.

Here, the perception quality estimation processing unit 250 in the first embodiment corresponds to the perception quality estimation processing unit 220 in the second embodiment, for example. Also, the quality evaluation processing unit 251 in the first embodiment corresponds to the perceptual or sensory quality evaluation processing unit 240 in the second embodiment, for example.

The content server interface 201 receives the content information and the quality index collection instruction transmitted from the content server 100 (for example, S4 in FIG. 3), and converts into the data format capable of processing by the quality evaluation server 200. The content server interface 201 outputs the converted content information to the content information reception unit 202, and also outputs the converted quality index collection instruction to the quality index collection processing unit 206. Also, the content server interface 201 converts the evaluation result output from the evaluation result notification processing unit 260 into the format transmittable to the content server 100, and transmits to the content server 100.

Here, the content information is, for example, information related to the past content viewing history of a registered subscriber, and includes information indicating what content the registered subscriber viewed at what place in what time zone. Further, in the content information, for example, the evaluation value representing the evaluation result of perceptual or sensory quality may also be included. As to the evaluation value, the explanation is given in <3.2 Example of evaluation processing of perceptual or sensory quality in quality evaluation server 200>. The content information may be transmitted periodically from the content server 100, or may be transmitted from the content server 100 upon request from the quality evaluation server 200, for example.

The content information reception unit 202 receives the content information transmitted from the content server 100 via the content server interface 201, and stores into the content information storage unit 203.

The content information storage unit 203 stores content information. The stored content information is appropriately read out by the perceptual or sensory quality evaluation processing unit 240.

The MME interface 205 converts the inquiry (for example, S5 in FIG. 3) about the accommodating base station 500 output from the quality index collection processing unit 206 into a format transmittable to the MME 400, and transmits to the MME 400. Also, on receiving from the MME 400 a reply to the inquiry about the accommodating base station 500 (for example, S6 in FIG. 3), the MME interface 205 performs conversion into a format capable of processing by the quality evaluation server 200, and outputs to the quality index collection processing unit 206.

On receiving the quality index collection instruction from the content server 100 (for example, S4 in FIG. 3), the quality index collection processing unit 206 inquires of the MME 400 the base station 500 that accommodates the terminal 600 (or user) which is a target for quality index collection (for example, S5 in FIG. 3). Then, on receiving the reply to the inquiry from the MME 400, the quality index collection processing unit 206 instructs the base station 500 of concern to start collecting the quality index of the target subscriber (for example, S7 in FIG. 3). Further, on receiving the content delivery completion notification from the content server 100 (for example, S11 in FIG. 3), the quality index collection processing unit 206 requests the base station 500 of concern to transmit the quality index (for example, S13 in FIG. 3). By this, the quality evaluation server 200 can receive the quality index detected in the base station 500 (for example, S14 in FIG. 3). Also, on receiving the content delivery completion notification from the content server 100 (for example, S11 in FIG. 4), the quality index collection processing unit 206 can request the base station 500 to complete the collection of quality index (for example, S18 in FIG. 4). As such, the quality index collection processing unit 206 can instruct the terminal 600 and the base station 500 to collect the quality index via the base station/terminal interface 207. Each collected quality index is received in the quality index reception unit 208 through the base station/terminal interface 207.

The base station/terminal interface 207 receives from the quality index collection processing unit 206 the quality index start instruction (for example, S7 in FIG. 3), the quality index transmission request (for example, S13 in FIG. 3), or the like, converts such the instruction or the like, into a format transmittable to the base station 500, and transmits to the base station 500. Also, the base station/terminal interface 207 converts the quality index transmitted from the base station 500 or the terminal 600 via the base station 500 (for example, S12 and S14 in FIG. 3) into a format capable of processing by the quality evaluation server 200, and outputs to the quality index reception unit 208. Further, it is also possible for the base station/terminal interface 207 to receive the evaluation result from the evaluation result notification processing unit 260, to convert into a format transmittable to the base station 500, and to transmit to the base station 500.

The quality index reception unit 208 receives the quality index of the base station 500 or the terminal 600 transmitted from the base station 500 or the terminal 600, and stores into the quality index storage unit 209. The quality index stored in the quality index storage unit 209 is appropriately read out from the quality index storage unit 209 by the perception quality estimation processing unit 220. Also, the quality index reception unit 208 reads out an operation condition from the operation condition storage unit 213, and extracts the quality index that matches the operation condition (or satisfies the operation condition). Further, the quality index reception unit 208 extracts the displacement of quality index in the extracted quality index, and stores the displacement value into the quality index storage unit 209.

The operator interface 211 outputs to the operation condition reception unit 212 the operation condition input either by an operation of an operator (or a common carrier) for the quality evaluation apparatus 200 or from a server used by the operator, for example. As the operation condition, a variety of conditions provided from the operator (or common carrier) are settable. Such conditions include, for example, an area, a time zone, an attribute of a registered subscriber, an actual operation state of the base station 500 (for example, state in suspension, failure occurrence, etc.), a threshold condition to be a criterion for evaluation, or the like. By the designation of the operation condition, it is possible to determine the quality index that matches the operation condition designated by the operator, or satisfies the operation condition, as the quality index to be evaluated. Such extraction of the evaluation target quality index is performed in the quality index reception unit 208 as explained above, for example.

The operation condition reception unit 212 receives the operation condition input via the operator interface 211 and stores it into the operation condition storage unit 213. The operation condition is appropriately read out from the operation condition storage unit 213 by the quality index reception unit 208.

On the displacement value of quality index stored in the quality index storage unit 209, the perception quality estimation processing unit 220 analyzes the feature of the quality index displacement to estimate the perceptual or sensory quality. When analyzing the feature of the quality index displacement, it may also be possible for the perception quality estimation processing unit 220 to perform analysis with a psychological factor taken into account. As to a method for analyzing the feature of the quality index displacement, the detailed explanation thereof is given in <3.1 Typical example of estimation processing of perceptual or sensory quality>. The perception quality estimation processing unit 220 outputs the estimated perceptual or sensory quality to the perceptual or sensory quality evaluation processing unit 240, as the estimated perception quality value.

The perceptual or sensory quality evaluation processing unit 240 performs processing to reflect the human psychological factor in the estimated perception quality value or the like, and evaluates the perceptual or sensory quality. Then, the perceptual or sensory quality evaluation processing unit 240 outputs the evaluated result to the evaluation result notification processing unit 260, as the perceptual or sensory quality evaluation value. Also, it is also be possible that the perceptual or sensory quality evaluation processing unit 240 compares the past viewing history of the viewer (registered user) with the perceptual or sensory quality evaluation value as content information, and dependent on the comparison result, corrects the perceptual or sensory quality evaluation value. The details of the evaluation processing of the perceptual or sensory quality will be explained in <3.2 Example of evaluation processing of perceptual or sensory quality in quality evaluation server 200>.

The evaluation result notification processing unit 260 transmits the perceptual or sensory quality evaluation value to the content server 100, the base station 500, or the like, and also notifies the operator. In the content server 100, the base station 500, or the like, it is possible to perform radio resource allocation and charging in accordance with the received perceptual or sensory quality evaluation value. By this, for example, it is possible to contribute to the improvement of the moving picture delivery service and so on. As to an example of an application using such the perceptual or sensory quality evaluation value, an explanation is given in <4 Concerning application using perceptual or sensory quality>.

<3 Estimation processing and evaluation processing of perceptual or sensory quality>

Next, an explanation is given on the estimation processing and the evaluation processing of perceptual or sensory quality. For example, the estimation processing of perceptual or sensory quality is performed in the perception quality estimation processing unit 220, and the evaluation processing of perceptual or sensory quality is performed in the perceptual or sensory quality evaluation processing unit 240.

FIG. 9 is a diagram illustrating an overall processing flow in the quality evaluation server 200. In FIG. 9, a configuration example of the quality evaluation server 200 illustrated in FIG. 8 is included, and also the detail of the quality information reception unit, various types of DB, etc. are described.

Concerning the relation of correspondence between the configuration of the quality evaluation server 200 illustrated in FIG. 9 and the configuration of the quality evaluation server 200 illustrated in FIG. 8, the quality index reception unit 208 includes a radio quality information acceptance processing unit 2081, a radio quality information extraction processing unit 2082, a decision condition extraction processing unit 2083, an extraction information DB 2084, a decision condition DB 2085, and a radio quality displacement decision processing unit 2086. Also, the operation condition storage unit 213 illustrated in FIG. 8 corresponds to an operation condition DB illustrated in FIG. 9, for example, and the quality index storage unit 209 illustrated in FIG. 8 corresponds to a quality information DB 2091 and a quality displacement value DB 2092 illustrated in FIG. 9, for example. Further, the content information storage unit 203 illustrated in FIG. 8 corresponds to a content viewing history DB 2031 illustrated in FIG. 9. Additionally, an estimated perception quality value DB 230, a perceptual or sensory quality evaluation value DB 245, a notification log, and so on, correspond to a memory and so on, in the quality evaluation server 200, for example. A newly added configuration etc. in FIG. 9 will successively be explained in the course of explaining the processing flow in FIG. 9.

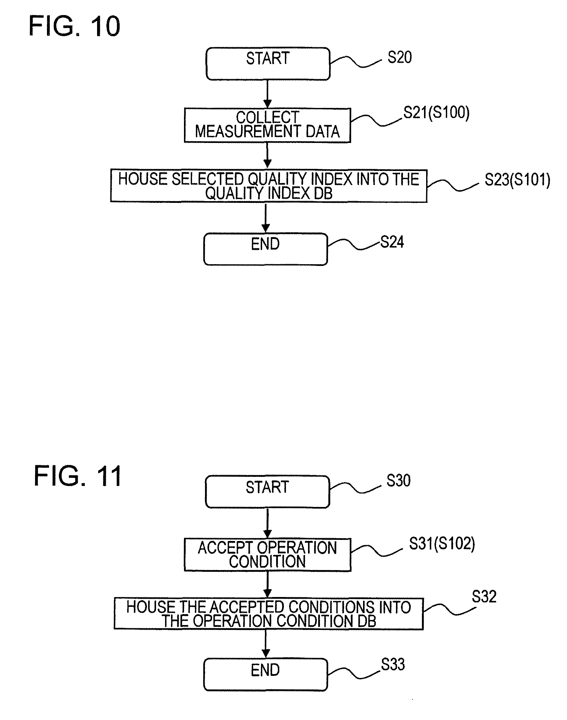

Further, FIG. 10 through FIG. 17 are flowcharts respectively illustrating examples of processing performed in each unit in the quality evaluation server 200 illustrated in FIG. 9. These flowcharts and so on, will appropriately be explained in the course of the explanation of FIG. 9.

First, overall processing will be explained by use of FIG. 9, and the explanation of the estimation processing and the evaluation processing of perceptual or sensory quality will be given in and after <3.1 Typical example of estimation processing of perceptual or sensory quality>.

First, the radio quality information acceptance processing unit 2081 receives the quality index transmitted from the base station 500 (S101), and stores the received quality indexes into the quality information DB 2091 (S101). In the quality indexes, the quality index measured in the base station 500 and also the quality index measured in the terminal 600 are included.

FIG. 10 is a flowchart illustrating an operation example in the radio quality information acceptance processing unit 2081. Some parts of processing illustrated in FIG. 10 overlap with the processing illustrated in FIG. 9.

The radio quality information acceptance processing unit 2081, on starting processing (S20), collects (or receives) measurement data (S20 or S100). Here the measurement data is, for example, the quality index transmitted from the base station 500. Subsequently, the radio quality information acceptance processing unit 2081 stores the collected quality index into the quality information DB 2091 (S23 or S101). Then, the radio quality information acceptance processing unit 2081 completes a series of processing (S24).

By reference back to FIG. 9, the operation condition reception unit 212 receives the operation condition (S102), and stores the received operation condition into the operation condition DB (S103). The operation condition is, for example, a variety of conditions provided by the operator (or common carrier) as described earlier, and an attribute of a registered subscriber, an actual operation state of the base station 500 (for example, a state in suspension, failure occurrence, etc.), a threshold condition to be a criterion for evaluation, or the like, are applicable, for example.

FIG. 11 is a flowchart illustrating an operation example in the operation condition reception unit 212. Some parts of processing illustrated in FIG. 11 overlap with the processing illustrated in FIG. 9.

The operation condition reception unit 212, on starting processing (S30), receives the operation condition (S31 or S102), stores the received operation condition into the operation condition DB (S32 or S103), and completes a series of processing (S33).

Here, in FIG. 9, in regard to the input processing of the quality index (S100, S101, S104) and the input processing of the operation condition (S102, S203 and S105), the sequence thereof may be reversed, so that the input processing of the operation condition may be executed first, and subsequently, the input processing of the quality index may be executed.

In FIG. 9, the radio quality information extraction processing unit 2082 respectively reads out each quality index stored in the quality information DB 2091 and the operation condition stored in the operation condition DB (S104, S105), and extracts the prescribed quality index among the quality indexes being read out, based on the operation condition.

In the quality information DB 2091, the variety of quality indexes for use for the evaluation of perceptual or sensory quality (for example, reception power level, packet loss rate, etc.) are stored. The radio quality information extraction processing unit 2082 extracts a quality index that matches the operation condition or satisfies the operation condition from such quality indexes.

For example, as the operation condition, when there is set the quality index such that each reception power level of the base station 500 or the terminal 600 is a constant or higher, the radio quality information extraction processing unit 2082 can extract the quality index that matches such the condition from among the quality indexes stored in the quality information DB 2091.

Then, the radio quality information extraction unit processing unit stores the extracted quality index into the extraction information DB 2084 (S107).

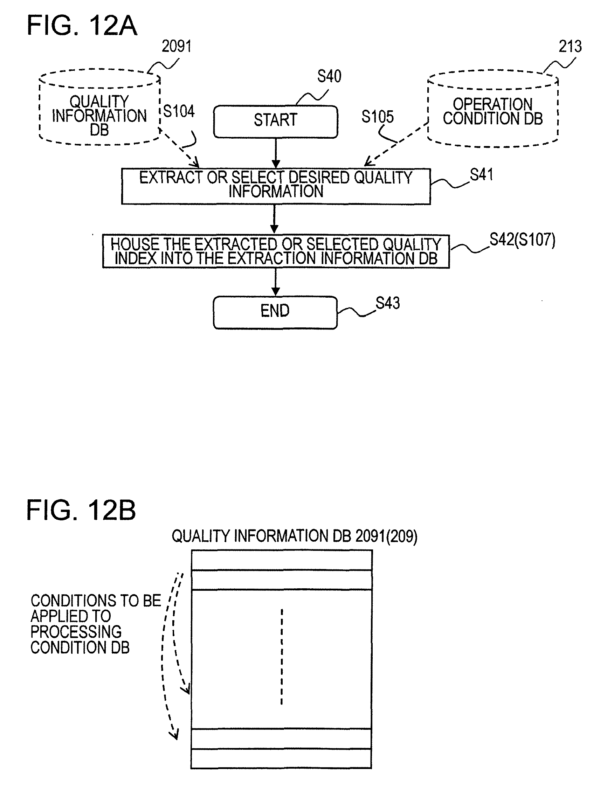

FIG. 12A is a flowchart illustrating an operation example of the radio quality information extraction processing unit 2082. Some parts of processing illustrated in FIG. 12A overlap with the processing illustrated in FIG. 9.

The radio quality information extraction processing unit 2082, on starting processing (S40), reads out each quality index from the quality information DB 2091, reads out an operation condition from the operation condition DB, and extracts prescribed quality information that matches the operation condition (or satisfies the operation condition) (S41). The radio quality information extraction processing unit 2082 stores the extracted quality index into the extraction information DB 2084 (S42 or S107), and completes a series of processing (S43).

Here, FIG. 12B illustrates an example of quality information stored in the quality information DB 2091. FIG. 12B illustrates such a state that, by the radio quality information extraction processing unit 2082, one or a plurality of quality indexes are extracted from the quality indexes stored in the quality information DB 2091 that matches the operation condition (or satisfies the operation condition).

By reference back to FIG. 9, the decision condition extraction processing unit 2083 reads out each operation condition from the operation condition DB (S105), and extracts a decision condition concerning the quality displacement decision of radio quality from the operation condition being read out. As the decision condition, because of being extracted from the operation condition, for example, there are such conditions as a user attribute, an area, a threshold, or the like. For example, a flag is given to those that can be the decision condition in each operation condition, so that the decision condition extraction processing unit 2083 can extract the decision condition by reading out the operation condition to which the flag is given from among the operation conditions stored in the operation condition DB. The flag is given by an input operation or the like, by the operator, for example, and it is assumed that the flag is given for each operation condition when the operation condition is input in the operator interface 211.

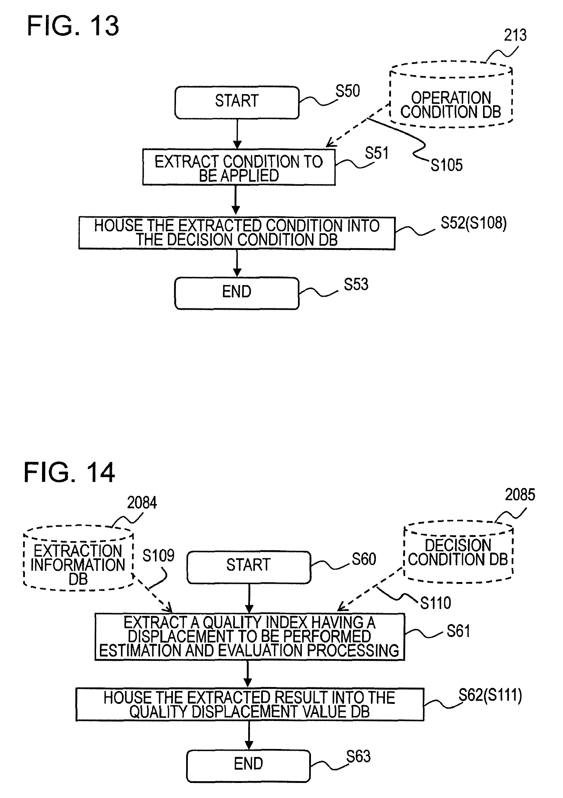

FIG. 13 is a flowchart illustrating an operation example of the decision condition extraction processing unit 2083. The decision condition extraction processing unit 2083, on starting processing (S50), reads out each operation condition from the operation condition DB (S105), and extracts the decision condition (S51). The decision condition extraction processing unit 2083 extracts the decision condition by reading out the operation condition to which the flag is given, for example. The decision condition extraction processing unit 2083 stores the extracted decision condition into the decision condition DB 2085 (S52, or S108 in FIG. 9), and completes a series of processing (S53).

By reference back to FIG. 9, based on the quality information being read out from the extraction information DB 2084 and the decision condition being read out from the decision condition DB 2085, the radio quality displacement decision processing unit 2086 extracts the displacement of quality index that may influence the estimation of perceptual or sensory quality. For example, the radio quality displacement decision processing unit 2086 determines a width between the maximum value and the minimum value of each quality index or whether or not a time-series variation of the quality index is a threshold of the decision condition or greater, or the like, and outputs the displacement value of the quality index if the width or the variation is the threshold or greater.

More specifically, the radio quality displacement decision processing unit 2086 extracts the quality index that has a sufficient displacement to perform estimation processing and evaluation processing (or satisfies the decision condition), and excludes the quality index having an insufficient displacement (or not satisfying the decision condition) from a target for processing. By this, the quality indexes to be targeted for subsequent processing is narrowed, which enables efficient overall processing of the quality evaluation server 200.

FIG. 14 is a flowchart illustrates an operation example of the radio quality displacement decision processing unit 2086. Some parts of processing illustrated in FIG. 14 overlap with FIG. 9.

The radio quality displacement decision processing unit 2086, on starting processing (S60), reads out each quality index from the extraction information DB 2084, and reads out a decision condition from the decision condition DB 2085 (S109, S110). Then, the radio quality displacement decision processing unit 2086 extracts the quality index that has a sufficient displacement to perform estimation and evaluation processing (or satisfies the decision condition) (S61). Then, the radio quality displacement decision processing unit 2086 stores the displacement value of the extracted quality index into the quality displacement value DB 2092 (S62 or S111), and completes a series of processing (S63).

By reference back to FIG. 9, the perception quality estimation processing unit 220 reads out the quality index displacement value from the quality displacement value DB 2092 (S112) and analyzes the feature of the quality index displacement to estimate the perceptual or sensory quality, so as to estimate the perceptual or sensory quality and store the analysis result into the estimated perception quality value DB 230 as the estimated perception quality value (S118).

As methods for analyzing the feature of the quality index displacement, there are distribution state processing (S113), dispersion degree processing (S114), deviation degree processing (S115), first transition probability processing (S116), asymmetric discrete processing (S117), and so on. Among such analysis methods, it is arbitrary which is to be used or what combination is to be used. Details of the above analysis methods will be explained in <3.1 Typical example of estimation processing of perceptual or sensory quality>.

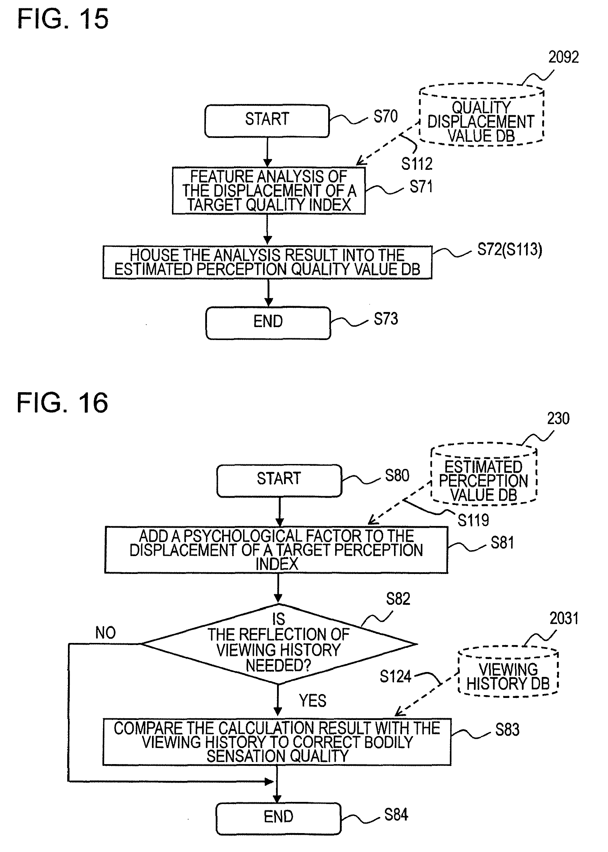

FIG. 15 is a flowchart illustrating an operation example performed in the perception quality estimation processing unit 220. Some parts of processing illustrated in FIG. 15 overlap with the processing illustrated in FIG. 9.

The perception quality estimation processing unit 220, on starting processing (S70), reads out from the quality displacement value DB 2092 the quality index displacement value to be targeted (S112), and analyzes the feature of the quality index displacement (S71). Then, the perception quality estimation processing unit 220 stores the analysis result into the estimated perception quality value DB 230 as the estimated perception quality value (S72 or S113), and completes a series of processing (S73).

By reference back to FIG. 9, the perceptual or sensory quality evaluation processing unit 240 evaluates the perceptual or sensory quality from the analysis result (estimated perception quality value) obtained in the perception quality estimation processing unit 220. At the estimation, the analysis is performed with a human psychological factor taken into account, and as a method for such analysis, there are second transition probability processing (S120), relative evaluation processing (S121), and so on. The details will be explained in <3.2 Example of evaluation processing of perceptual or sensory quality in quality evaluation server 200>.

The perceptual or sensory quality evaluation processing unit 240, by performing such analysis on the estimated perception quality value, evaluates the perceptual or sensory quality to output the analysis thereof (or evaluation result) as the perceptual or sensory quality evaluation value. The perceptual or sensory quality evaluation processing unit 240 stores the perceptual or sensory quality evaluation value into the perceptual or sensory quality evaluation value DB 245 (S126).

It may also be possible for the perceptual or sensory quality evaluation processing unit 240 to perform an expected quality/viewing history comparison processing (S125). The perceptual or sensory quality evaluation processing unit 240 compares the past viewing history of the viewer (registered user) with the perceptual or sensory quality evaluation value, as content information, and corrects the perceptual or sensory quality evaluation value when the viewing history into the perceptual or sensory quality is reflected.

For example, when the estimated perceptual or sensory quality evaluation value is such a value as deviating from the past viewing history, the perceptual or sensory quality evaluation processing unit 240 discriminates that the viewing history is reflected, and corrects the estimated perceptual or sensory quality evaluation value. The details will be explained in <3.2 Example of evaluation processing of perceptual or sensory quality in quality evaluation server 200>.

FIG. 16 is a flowchart illustrating an operation example performed in the perceptual or sensory quality evaluation processing unit 240. Some parts of processing illustrated in FIG. 16 overlap with the processing illustrated in FIG. 9.

The perceptual or sensory quality evaluation processing unit 240, on starting processing (S80), reads out the estimated perception quality value from the estimated perception quality value DB 230, and performs processing for the estimated perception quality value with the human psychological factor taken into account (S81). The present processing corresponds to the second transition probability processing (S120) and the relative evaluation processing (S121) illustrated in FIG. 9, for example.

Then, the perceptual or sensory quality evaluation processing unit 240 discriminates whether or not the viewing history in the processing result of S81 (or the perceptual or sensory quality evaluation value) may be reflected (S82). For example, the discrimination can be made by whether or not the estimated perceptual or sensory quality deviates from the past viewing history, or whether or not the estimated perceptual or sensory quality is within the range of the past viewing history. For example, the psychological factor that the majority of viewers are influenced by the past empirical rule and so on is taken into consideration.

The perceptual or sensory quality evaluation processing unit 240, when discriminating that the viewing history may be reflected (Yes in S82), corrects the estimated perceptual or sensory quality evaluation value based on the past viewing history read out from the content viewing history DB 2031 (S83). The "correction" in the present processing means to make the estimated perceptual or sensory quality "worse" (for example, lowering by one rank) when the estimated perceptual or sensory quality deviates from the past viewing history (or not in the range of the past viewing history), for example. With such the correction, it is possible to modify the estimated perceptual or sensory quality to that in which the human psychological factor is taken into consideration. The present processing corresponds to the expected quality/viewing history comparison processing (S125) illustrated in FIG. 9, for example.

Then, the perceptual or sensory quality evaluation processing unit 240 completes a series of processing (S84). Here, the corrected perceptual or sensory quality evaluation value is also stored into the perceptual or sensory quality evaluation value DB 245.

On the other hand, the perceptual or sensory quality evaluation processing unit 240, when discriminating that the viewing history may not be reflected (No in S82), completes a series of processing without specifically correcting the perceptual or sensory quality evaluation value (S84).

By reference back to FIG. 9, the evaluation result notification processing unit 260 appropriately reads out the perceptual or sensory quality evaluation value stored in the perceptual or sensory quality evaluation value DB 245 (S127), and notifies the base station 500, the content server 100, or the like, via each interface 201, 207, 211 (S128). Also, the evaluation result notification processing unit 260 can store the perceptual or sensory quality evaluation value into the memory as a notification log (S129).

Meanwhile, as to the registration of the past viewing history to the content viewing history DB 2031, such processing as follows is performed. Namely, the content information reception unit 202 receives the content information from the content server 100 via the content server IF 201, and stores into the content viewing history DB 2031. The content viewing history DB 2031 illustrated in FIG. 9 corresponds to the content information storage unit 203 illustrated in FIG. 8, for example. As the content information, there are included, for example, the place, the time, and the type of each content viewed in the past by the viewer, and further, each perceptual or sensory quality value evaluated in the past. The perceptual or sensory quality evaluation processing unit 240 can perform processing by comparing the content information being read out from the content viewing history DB 2031 with the perceptual or sensory quality value evaluated by the second transition probability processing (S120) etc. (for example, S82 in FIG. 16, etc.).

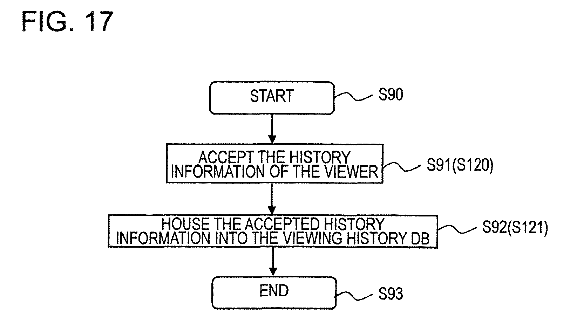

FIG. 17 is a flowchart illustrating an operation example of the content information reception unit 202. Some parts of processing illustrated in FIG. 17 overlap with the processing illustrated in FIG. 9.

The content information reception unit 202, on starting processing (S90), receives the content information, accepts the past viewing history of the viewer (S91 or S122), stores the content information into the content viewing history DB 2031 (S92 or S123), and then completes a series of processing (S93).

Here, in the present embodiment, the viewer indicates a pay service registrant who can view pay content. Such the viewer pays a fee for receiving a provided service to an information provider that manages the content server 100, for example, and is a person who wants to receive some advantage based on the perceptual or sensory quality estimated and evaluated by the present communication system 10.

<3.1 Typical example of estimation processing of perceptual or sensory quality>

Next, an explanation is given on a typical example of the estimation processing of perceptual or sensory quality performed in the perception quality estimation processing unit 220. As the typical example of the estimation processing of perceptual or sensory quality, there is distribution state processing (S113), dispersion degree processing (S114), deviation degree processing (S115), first transition probability processing (S116), asymmetric discrete processing (S117), and so on, as illustrated in FIG. 9.

The perception quality estimation processing unit 220 performs such the processing to perform feature analysis on the quality index displacement value, to thereby estimate the perceptual or sensory quality of the picture that the viewer is viewing (or the picture being reproduced by the terminal 600).

In the present item, typical examples of such processing are explained successively.

<3.1.1 Distribution state processing>

First, the distribution state processing (S113) is explained. The explanation is given with an example of the displacement of transmission power applied for a quality index when transmission power control is performed in the base station 500, for example.

In the base station 500, in some cases, processing called transmission power control is performed to the terminal 600. When the transmission power control is performed, the base station 500 requests the terminal 600 to increase transmission power when quality in a radio section between with the terminal 600 falls below a reference value, and to decrease transmission power when quality in the radio section exceeds a reference value. By performing such transmission power control, the base station 500 can provide a continuous service for the terminal 600.

When the transmission power control is performed, by continuously plotting in time series the increase of transmission power as "+" and the reduction of transmission power as "-", it is possible to obtain a graph illustrated in FIG. 18. Such the displacement of transmission power may be referred to as a power control displacement in some cases, for example. The power control displacement represents the displacement of radio channel quality that continues in time series, and therefore, the power control displacement can be used as a quality index.

Here, in FIG. 18, the horizontal axis indicates the time and the vertical axis indicates the power control displacement. Further, "f0", "f1", etc. represent each unit time. As the unit time, one radio frame period or one picture frame period can be defined, for example.

For example, such a power control displacement is transmitted from the base station 500 (for example, S14 in FIG. 3, and S17-1 to S17-n in FIG. 4), and a power control displacement is extracted by the radio quality information extraction processing unit 2082 (FIG. 9) and the radio quality displacement decision processing unit 2086 (FIG. 9), so as to be stored into the quality displacement value DB 2092 (for example, S111 in FIG. 9). By this, for example, the perception quality estimation processing unit 220 can obtain a power control displacement, as illustrated in FIG. 8, that matches (or satisfies) a decision condition. In the case of the above example, a power control displacement value (for example, a value illustrated in the vertical axis in FIG. 18) that matches the decision condition is stored into the quality displacement value DB 2092.

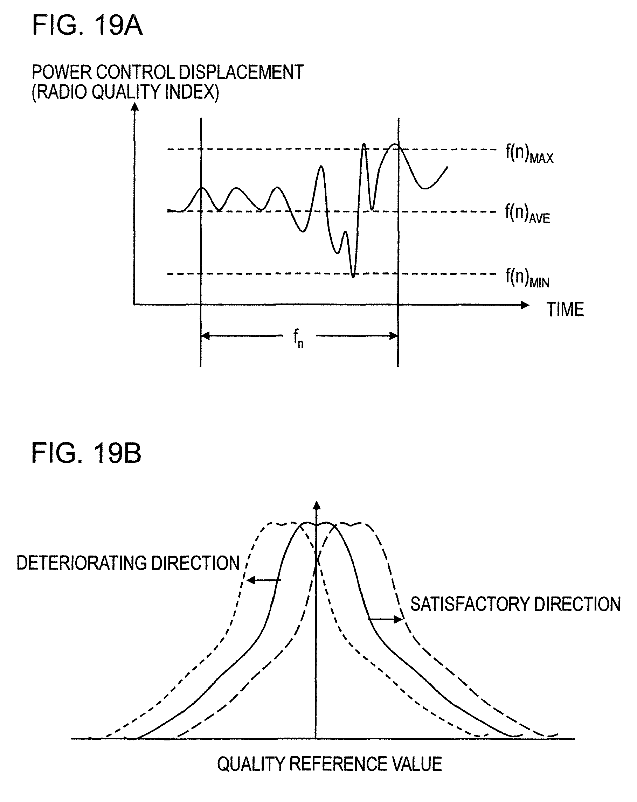

FIG. 19A is a graph illustrating an example of the power control displacement in a predetermined period "fn".

In the distribution state processing (S113), the perception quality estimation processing unit 220 extracts or calculates a maximum value $(f(n)_{MAX})$, a minimum value $(f(n)MIN)$ or an average value $(f(n)AVE)$, to perform normalization thereof. The normalized value is defined as PQS(n). The distribution of PQS(n) in each predetermined period (for example, $0 \leq n \leq k$) becomes normal distribution centered on a predetermined quality reference value.

FIG. 19B is a graph illustrating an example of such normal distribution. In FIG. 19B, the horizontal axis indicates a normalized power control displacement, and the vertical axis indicates the distribution of normalized PQS (hereafter referred to as the number of pieces). In FIG. 19B, for example, centered on the quality reference value, the right side represents that the radio quality is satisfactory, and the left side represents that the radio quality is deteriorated, for example.

As such, in the distribution state processing (S113), the perception quality estimation processing unit 220 normalizes each transmission power control displacement stored in the quality displacement value DB 2092 for each predetermined period, and integrates the number of each transmission power control displacement normalized in each section based on each normalized transmission power control displacement value, so that can obtain the distribution state of the transmission power control displacement, for example. From such the distribution state of each transmission power control displacement, the quality tendency of data traffic in a radio section can be grasped, and the tendency of perceptual or sensory quality that the data traffic is given to the viewer can be estimated.

As a quality index, a reception power level, a packet loss rate, etc. other than the transmission power control displacement may be applicable. In such cases also, for example, the perception quality estimation processing unit 220 reads out each quality index from the quality displacement value DB 2092, and can obtain a quality index distribution state by normalizing each read-out quality index for each predetermined period and integrating the number of normalized quality indexes based on each normalized quality index value.

The perception quality estimation processing unit 220, by the distribution state processing (S113), stores the normalized quality index value PQS(n) and the number of each value PQS(n) into the estimated perception quality value DB 230, as the estimated perceptual or sensory quality, for example (S118 in FIG. 9). The quality index value PQS(n) and the number of each value PQS(n) stored in the estimated perception quality value DB 230 come to be evaluated by the perceptual or sensory quality evaluation processing unit 240 in the latter stage.

<3.1.2 Dispersion degree processing>

Next, as a typical example of the estimation processing of perceptual or sensory quality, an explanation is given on the dispersion degree processing (S114).

In the above-mentioned distribution state processing (S113), each quality index normalized value PQS(n) is extracted and calculated. In the dispersion degree processing (S114), the perception quality estimation processing unit 220 calculates a variance PQSDISTRIBUTION or a standard deviation $PQS_{STANDARD\ DEVIATION}$ of the quality index normalized value PQS(n). The perception quality estimation processing unit 220 can apply the variance PQSDISTRIBUTION or the standard deviation $PQS_{STANDARD\ DEVIATION}$ to be a degree of dispersion. The above degree of dispersion can be applied as the estimated perceptual or sensory quality, for example.

The perception quality estimation processing unit 220 calculates a variance PQSDISTRIBUTION and a standard deviation $PQS_{STANDARD\ DEVIATION}$ using the following equations, for example.

$$PQSDISTRIBUTION = \{(PQS(0) - PQSAVE)^2 + (PQS(1) - PQSAVE)^2 + \cdots$$

$$PQSSTANDARD\ DEVIATION = \sqrt{PQSDISTRIBUTION} \quad \cdots\cdots (2)$$

The perception quality estimation processing unit 220 performs normalization processing on each quality index displacement value read out from the quality displacement value DB 2092, and calculates equation (1) or equation (2) on the normalized value PQS(n), to store the calculation result thereof into the estimated perception quality value DB 230, as the estimated perceptual or sensory quality.

Because such the degree of dispersion enables grasping to what extent each quality index disperses from a predetermined quality reference value, it is possible to grasp the quality tendency of data traffic in the radio section and estimate the tendency of perceptual or sensory quality that the data traffic is given to the viewer, for example. As to the degree of dispersion also, an evaluation will come to be made by the perceptual or sensory quality evaluation processing unit 240 in the latter stage.

<3.1.3 Deviation degree processing>

Next, as a typical example of the estimation processing of perceptual or sensory quality, an explanation is given on the deviation degree processing (S115).

As to the deviation degree processing also, a normalized value PQS(n) is used. For example, in FIG. 18, a plurality of continuous unit sections "f0", "f1", ... are integrated into one and generates one block. The perception quality estimation processing unit 220 obtains an average value $PQS(bn)_{AVE}$ of each normalized value PQS(n) in one block, to calculate the degree of deviation $PQS_{DEVIATION}$ relative to the quality reference value $PQS(b)_{STANDARD}$ by the following equation.

$$PQSDEVIATION=\{(PQS(b1)AVE-PQS(b)STANDARD)^2$$

$$+(PQS(b2)AVE-PQS(b)STANDARD)^2+\cdots\}/PQS(b)STANDARD \quad \ldots\ldots (3)$$

In the deviation degree processing (S115), based on assumption that no deviation of quality index exists in each block, the degree of deviation in each block is decided by use of the value calculated in equation (3). The degree of deviation represents to what extent the average value $PQS(bn)_{AVE}$ of each normalized value PQS(n) in one block deviates from the quality reference value $PQS(b)_{STANDARD}$.

The perception quality estimation processing unit 220 integrates a plurality of continuous predetermined periods or unit sections to generate one block, and performs normalization processing on quality index displacement values in each block, so as to obtain the average value $PQS(bn)_{AVE}$ of the normalized values for each block. Then, the perception quality estimation processing unit 220 substitutes a $PQS(b)_{STANDARD}$ retained in a memory etc. and the average value $PQS(bn)_{AVE}$ of the normalized values into equation (3), and so on, to calculate the degree of deviation $PQS_{DEVIATION}$.

As to the degree of deviation also, as is apparent from equation (3), the deviation of quality index from the reference value is obtained, and from such the deviation, it is possible to grasp the quality tendency of data traffic in the radio section and to estimate the tendency of perceptual or sensory quality that the data traffic isgiven to the viewer.

As to the degree of deviation $PQS_{DEVIATION}$ obtained by equation (3) also, an evaluation will come to be made by the perceptual or sensory quality evaluation processing unit 240 in the latter stage.

<3.1.4 First transition probability processing>

Next, as an example of the estimation processing of perceptual or sensory quality, an explanation is given on the first transition probability processing (S116). In the present item, as quality index, the explanation is given by taking picture quality q(n) of the moving picture (n represents an n-th picture frame, for example) as an example. The perception quality estimation processing unit 220 obtains the displacement value of the picture quality q(n) from the quality index DB, to perform normalization processing on the picture quality q(n). The normalized value of the picture quality q(n) is defined to be PQS(n). The perception quality estimation processing unit 220 performs processing on the above normalized value PQS(n) with a human psychological factor taken into account.

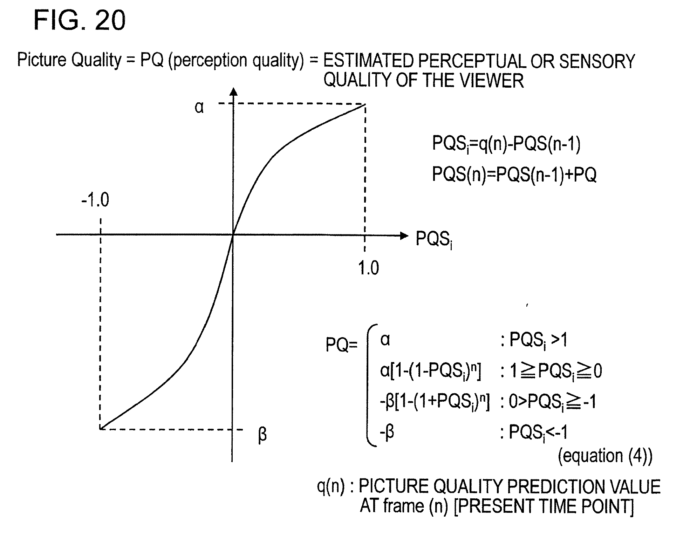

FIG. 20 illustrates an example of a graph illustrating a model called an Asymmetric Tracking Model. The Asymmetric Tracking Model is a model that represents a human psychological factor indicative of a tendency that, between quality advancement and reduction, the case of reduction is more strongly evaluated (or leaves greater impression) than the case of advancement. The horizontal axis indicates the normalized value PQS(n) relative to picture quality, and the vertical axis indicates an estimated perceptual or sensory quality value, respectively.

The perception quality estimation processing unit 220 weights the normalized value in a manner to match such an Asymmetric Tracking Model, so that can obtain an estimation value of the perceptual or sensory quality PQ.

For example, consider a case when the normalized value PQS(n) shifts in the range of values from "-10" to "+10". In this case, for example, the perception quality estimation processing unit 220 can set the absolute value of each value which is to be weighted on each normalized value PQS(n) that ranges from "-10" to "-1" higher than the absolute value of each value which is to be weighted on each normalized value PQS(n) that ranges from "+1" to "+10".

Alternatively, also in the above-mentioned distribution state processing (S113), the dispersion degree processing (S114) or the deviation degree processing (S115), the perception quality estimation processing unit 220 may weight on the normalized value PQS(n) in a manner to match the Asymmetric Tracking Model.

Additionally, in FIG. 20, as to the estimation value PQ, positive signifies satisfactory, whereas negative signifies deteriorated, for example.

In the first transition probability processing (S116), the perception quality estimation processing unit 220 further calculates transition probabilities Qn, Pn based on the temporal displacement of the estimation value of the perceptual or sensory quality PQ.

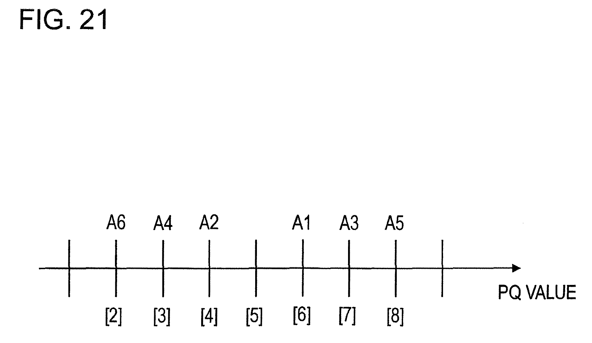

FIG. 21 is a diagram illustrating an example of a case when the estimation value PQ is plotted on the horizontal axis at each time t1, t2, ... For example, an estimation value PQ obtained from equation (4) [in Fig.20] at a certain time t1 is assumed to be A1, an estimation value PQ obtained at time t2 is assumed to be A2, and so on. In FIG. 21, for example, when a period from time t1 to time t2 is defined to be a unit time T, a minimum point $PQ_{n-1}$, a minimum point PQn next to the minimum point $PQ_{n-1}$, and a maximum point $PQ_{n+1}$ exist in the unit time T. In the example illustrated in FIG. 21, processing is completed at a time point of time t6 with regarding to be an "optimal termination", where the minimum point $PQ_{n-1}$=A6=2, the minimum point $PQ_n$ next to the minimum point $PQ_{n-1}$=A4=3, and the maximum point $PQ_{n+1}$=A5=8 are obtained. Here, in the example illustrated in FIG. 21, although the processing is completed at time t6, which is regarded as the time point of the "optimal termination", a time point when the processing is to be completed is arbitrarily settable.

Then, using the minimum point $PQ_{n-1}$, the minimum point PQn next to the minimum point PQn-1 and the maximum point $PQ_{n+1}$, the perception quality estimation processing unit 220 calculates transition probabilities Qn and Pn using the following equation (5) and equation (6), respectively.

$$Qn=[PQn+1-PQn]/[PQn+1-PQn-1] \quad \dots\dots \ (5)$$

$$Pn=[PQn-PQn-1]/[PQn+1-PQn-1] \quad \dots\dots \ (6)$$

The transition probabilities Qn, Pn in the example illustrated in FIG. 21 become $Q_6$=5/6 and P6=1/6. The perception quality estimation processing unit 220 stores the above transition probabilities Qn, Pn into the estimated perception quality value DB 230 as the estimated perceptual or sensory quality.

Here, by letting the transition probability Qn be a transition probability in a quality deterioration direction and the transition probability Pn be a transition probability in a quality advancement direction, the perceptual or sensory quality evaluation processing unit 240 in the latter stage compares the two transition probabilities, so that can estimate there is a large ratio of being unsatisfactory in the behavior of the perceptual or sensory quality, or the like. The details will be described later.

<3.1.5 Asymmetric discrete value processing>

Next, as a typical example of the estimation processing of perceptual or sensory quality, an explanation is given on the asymmetric discrete processing (S117).

In the asymmetric discrete value processing, the perception quality estimation processing unit 220 adds to the displacement value of quality index an asymmetric weight on the variation width thereof, to output the weighted variation width to the estimated perception quality value DB 230 as the estimated perceptual or sensory quality. For example, the quality index variation width may influence the perceptual or sensory quality in some cases depending on how the quality index varies.

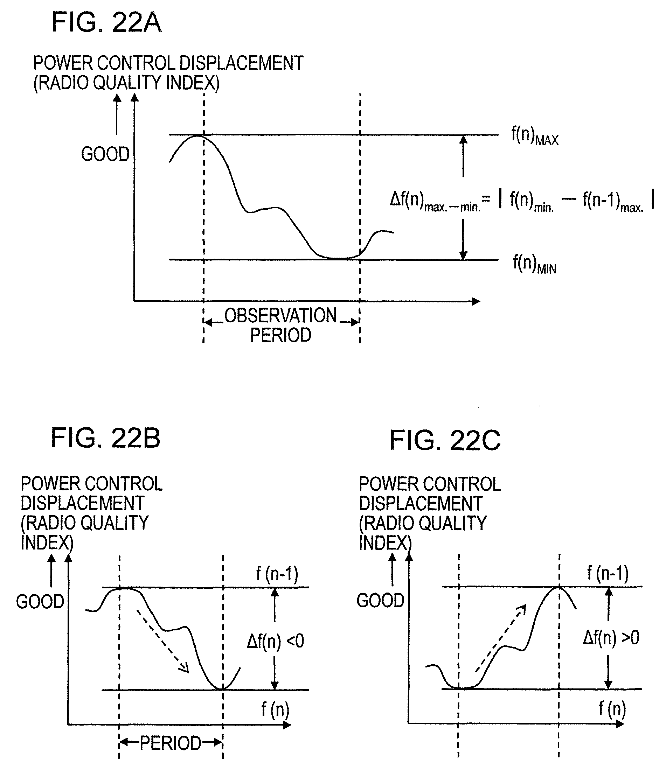

FIG. 22A is a diagram illustrating an example of a quality index variation value in a certain observation period. For a maximum value f(n)MAX and a minimum value $f(n)_{MIN}$ in the observation period, a variation width Δf(n) can be obtained by:

$$\Delta f(n)=|f(n)MIN-f(n)MAX| \quad \dots\dots \ (7)$$

Here, as to the quality index, on assumption that the higher the value is then the more satisfactory the radio quality is, the perceptual or sensory quality is deteriorated if the variation width Δf(n)<0, whereas improved if the variation width Δf(n)>0 (for example, FIG. 22B and FIG. 22C).

Then, the perception quality estimation processing unit 220 performs the asymmetric discrete processing (S117) using the Asymmetric Tracking Model, so that can process the quality index variation width Δf(n) with a human psychological factor taken into account.

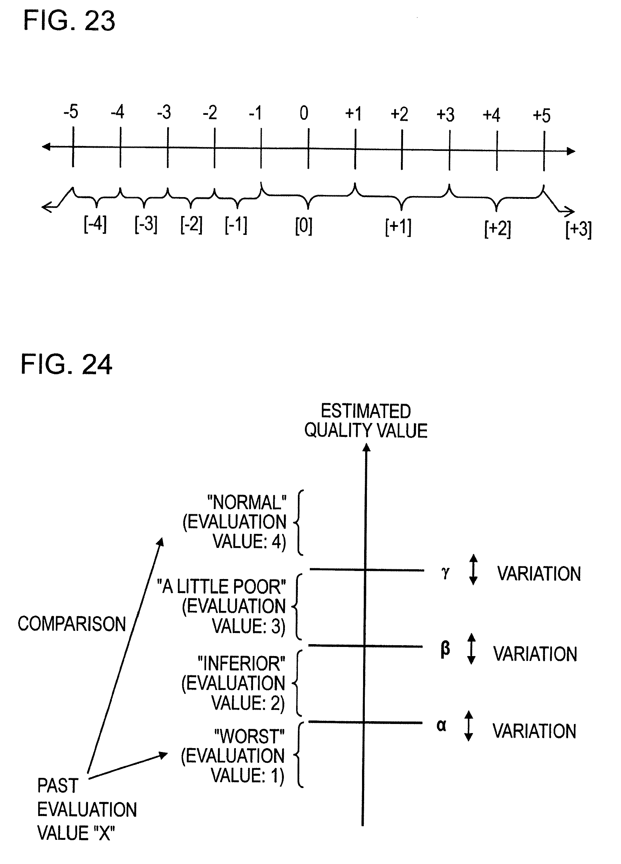

FIG. 23 is a diagram illustrating an example of weighting performed in the present processing. Numeric values like "-5", "-4", etc. represent "weights" that are represented by positive integers for the sake of easy explanation. As illustrated in FIG. 23, the perception quality estimation processing unit 220 weights the variation value Δf(n) in such a manner that the absolute value of a weight value when the variation value $\Delta f(n)$ becomes a negative value is set to be greater than the absolute value of a weight value when the variation value $\Delta f(n)$ becomes a positive value. With such weighting, the perception quality estimation processing unit 220 can perform processing that matches the Asymmetric Tracking Model. The perception quality estimation processing unit 220 stores the weighted variation value $\Delta f(n)$ into the estimated perception quality value DB 230, as an estimated perceptual or sensory quality value.

In the asymmetric discrete value processing also, when the quality index shifts to a deteriorating direction, the perception quality estimation processing unit 220 performs weighting with a larger value as compared with a case when the quality index shifts to an improving direction, so that can process the quality index displacement with a human psychological factor taken into account.

<3.1.6 Typical example of other estimation processing>

As other estimation processing, for example, it is also possible to use a Fourier transformation processing. The perception quality estimation processing unit 220 performs the Fourier transformation processing on a quality displacement value being read out from the quality displacement value DB 2092, to measure the intensity of the displacement. Then, using a quality displacement value after the Fourier transformation as an input, the perception quality estimation processing unit 220 can also perform such processing as the distribution state processing (S113), the dispersion degree processing (S114), the deviation degree processing (S115), the first transition probability processing (S116), asymmetric discrete value processing, etc.

Also, as other example of the estimation processing of perceptual or sensory quality, it is possible to use a frame loss rate, packet loss, the number of retransmissions, etc., for example. In the base station 500, for example, retransmission control using RLP (Radio Link Protocol) etc. may be executed in some cases, by which the degree of an RLP frame loss, the number of retransmissions, etc. can be observed. By the reception of the RLP frame loss degree, the number of retransmissions, etc. from the base station 500, it is also possible for the quality evaluation server 200 to estimate the displacement value thereof to determine the perceptual or sensory quality, weight the displacement value by asymmetric discrete value processing etc., or to calculate a transition probability by the first transition probability processing (S116) etc. It is also possible for the perception quality estimation processing unit 220 to perform arbitrary processing from the distribution state processing (S113) to the asymmetric discrete value processing on the quality index received from the base station 500, or to combine a plurality of sets of processing.

As explained In the foregoing, the perception quality estimation processing unit 220 performs feature analysis such as the distribution state processing (S113) etc. on the quality index displacement, and estimates the perceptual or sensory quality to store the estimated value into the estimated perception quality value DB 230. Then, the perceptual or sensory quality evaluation processing unit 240 performs processing to evaluate the estimated perceptual or sensory quality. The above evaluation processing is explained in the next item.

<3.2 Example of estimation processing of perceptual or sensory quality in quality evaluation server 200>

Next, an explanation is given on the evaluation processing of perceptual or sensory quality performed in the perceptual or sensory quality evaluation processing unit 240. As illustrated in FIG. 9 etc., the perceptual or sensory quality evaluation processing unit 240 reads out the estimated perception quality value stored in the estimated perception quality unit DB, so that can start the present processing.

In the present evaluation processing, for example, processing using the aforementioned Asymmetric Tracking Model is performed. In the perceptual or sensory quality evaluation processing, by the use of such the Asymmetric Tracking Model, there is made an evaluation that matches a human psychological factor in which the case of reduction of the estimated perceptual or sensory quality is more strongly evaluated (or leaves greater impression) than the case of advancement. As illustrated in FIG. 9, psychological factor processing performed in the perceptual or sensory quality evaluation processing unit 240 signifies such processing that uses the Asymmetric Tracking Model, for example.

The psychological factor processing includes the second transition probability processing (S120) and the relative evaluation processing (S121). In the second transition probability processing (S120) and the relative evaluation processing (S121), there is performed processing that follows the way of thinking of the Asymmetric Tracking Model.

In regard to such two types of processing, for example, comparison processing of an estimated perception quality value with a threshold is performed in the perceptual or sensory quality evaluation processing unit 240. If the estimated perception quality value is lower than the threshold, the perceptual or sensory quality evaluation processing unit 240 obtains an evaluation result (for example, "inferior quality" etc.) to the direction of poor quality, as compared with the case of being higher than the threshold. By this, the perceptual or sensory quality evaluation processing unit 240 can perform processing that matches the way of thinking of the Asymmetric Tracking Model.

Alternatively, it may also be possible for the perceptual or sensory quality evaluation processing unit 240 to output an evaluation result in such a manner that a first evaluation result produced when the estimated picture quality is lower than the threshold indicates worse quality than a second evaluation result.

In the following, the details of the second transition probability processing (S120) and the relative evaluation processing (S121) are explained as psychological factor processing.

Additionally, in the present evaluation processing, the expected quality/viewing history comparison processing (S125) is also performed. In regard to the estimated perceptual or sensory quality, a psychological factor functions such that the majority of viewers are influenced by past history or empirical rules, and accordingly, the expected quality/viewing history comparison processing (S125) performs processing with such a psychological factor taken into account. The details of the expected quality/viewing history comparison processing (S125) will also be explained later.

<3.2.1 Section transition probability processing>

The second transition probability processing (S120), for example, is a processing to estimate the transition tendency of perceptual or sensory quality from a theory of establishment, based on the estimated perception quality value obtained in the perception quality estimation processing unit 220, to evaluate the perceptual or sensory quality. At that time, the perceptual or sensory quality evaluation processing unit 240 performs processing that matches the Asymmetric Tracking Model.

Typically, the perceptual or sensory quality evaluation processing unit 240 reads out from the estimated perception quality value DB 230 two transition probabilities Qn, Pn obtained by the first transition probability processing (S116), and compares between the two transition probabilities Qn, Pn to thereby evaluate the perceptual or sensory quality, for example.

In the example of FIG. 21, $Q_6=5/6$ and $P_6=1/6$ have been obtained from equation (5) and equation (6). For example, the transition probability Qn is a transition probability related to a transition to the minimum point $PQ_{n-1}$, and therefore can be defined to be a transition probability to the quality deterioration direction. Also, the transition probability Pn is a transition probability related to a transition to the maximum point $PQ_{n+1}$, and therefore can be defined to be a transition probability to the quality improvement direction. As such, when letting the transition probability Qn to be the transition probability to the quality deterioration direction and the transition probability Pn to be the transition probability to the quality improvement direction, it is possible for the perceptual or sensory quality evaluation processing unit 240 to deduce that, because the transition probability $Q_6$ (=5/6) is higher in numeric value than the transition probability $P_6$ (=1/6), the perceptual or sensory quality of the picture the viewer is viewing has the ratio of being unsatisfactory higher than the ratio of being satisfactory. Oppositely, when the transition probability Pn is higher in numeric value than the transition probability Qn, it is also possible for the perceptual or sensory quality evaluation processing unit 240 to deduce that the perceptual or sensory quality of the picture the viewer is viewing has the ratio of being satisfactory higher than the ratio of being unsatisfactory.

The perceptual or sensory quality evaluation processing unit 240 compares the two transition probabilities Qn, Pn, to store into the perceptual or sensory quality evaluation value DB 245 such an evaluation result that, in the perceptual or sensory quality, the ratio of being satisfactory is higher than the ratio of being unsatisfactory, or the ratio of being unsatisfactory is higher than the ratio of being satisfactory. In this case, for example, the perceptual or sensory quality evaluation processing unit 240 performs digitization with a value that corresponds to the evaluation result, such as "1" (or the perceptual or sensory quality is satisfactory) for the former case and "0" (or the perceptual or sensory quality is unsatisfactory) for the latter case, so that can store the value into the perceptual or sensory quality evaluation value DB 245, as an evaluation result. It may also be possible for the perceptual or sensory quality evaluation processing unit 240 to store the estimated perceptual or sensory quality, that is, the two transition probabilities Pn, Qn in the above example into the perceptual or sensory quality evaluation value DB, together with the evaluation result.

As for the above evaluation result, it may also be possible if a transition probability Q (for example, a transition probability to a quality deterioration direction) is higher than a transition probability P, the perceptual or sensory quality evaluation processing unit 240 discriminates that "the quality is inferior", and if otherwise, evaluates that "the quality is normal", or the like. As for a quality deterioration (or quality reduction) direction, by performing evaluation stronger than for a quality improvement (or quality advancement) direction, the perceptual or sensory quality evaluation processing unit 240 can perform processing that matches the way of thinking of the aforementioned Asymmetric Tracking Model. Or, the perceptual or sensory quality evaluation processing unit 240 may evaluate stronger when the quality is deteriorated than when the quality is improved.

Or alternatively, the perceptual or sensory quality evaluation processing unit 240 may evaluate that "the quality is inferior" if a transition probability Q (for example, transition probability for the quality deterioration direction) is higher than a transition probability P by a threshold or greater, and "the quality is slightly inferior" if a transition probability Q is higher than a transition probability P but the difference is within the threshold, or the like. In this case also, as to the quality deterioration direction, the perceptual or sensory quality evaluation processing unit 240 may evaluate stronger than the quality improvement direction, to thereby perform processing that matches the way of thinking of the aforementioned Asymmetric Tracking Model.

<3.2.2 Relative evaluation processing>

Next, an explanation is given on the relative evaluation processing (S121). The relative evaluation processing (S121), for example, is a processing in the perceptual or sensory quality evaluation processing unit 240 to evaluate an estimated perception quality value using a relative evaluation index. At that time, the perceptual or sensory quality evaluation processing unit 240 performs processing that matches the Asymmetric Tracking Model.

FIG. 24 is a diagram for explaining the relative evaluation processing (S121). For example, in the case of a transition probability Qn obtained in the first transition probability processing (S116) as an estimated perception quality value, three thresholds $\alpha$, $\beta$, $\gamma$ are defined as relative evaluation indexes. For example, the above three thresholds can be determined to be the relative evaluation indexes.

At this time, the perceptual or sensory quality evaluation processing unit 240 evaluates stronger for the quality deterioration direction than for the quality improvement direction. For example, the perceptual or sensory quality evaluation processing unit 240 determines to be: "worst" if the transition probability Qn equals the threshold $\alpha$ or smaller; "inferior" if greater than and including the threshold $\alpha$, and smaller than and including $\beta$; "slightly inferior" if greater than and including the threshold $\beta$, and smaller than and including $\gamma$; "normal" if equals to the threshold $\gamma$; and the like, to thereby evaluate the transition probability Qn. As for the transition probability Pn also, the perceptual or sensory quality evaluation processing unit 240 compares the defined three thresholds $\alpha$, $\beta$, $\gamma$ with the transition probability Pn, so that can evaluate to be "satisfactory", "excellent", etc. according to whether or not being within the range of the thresholds.

With such the evaluation, the perceptual or sensory quality evaluation processing unit 240 can perform processing that matches the Asymmetric Tracking Model, in which evaluation is made stronger for the quality deterioration direction than for the quality improvement direction, for example.

The perceptual or sensory quality evaluation processing unit 240 stores the evaluation result into the perceptual or sensory quality evaluation value DB 245, and however, it may also be possible to digitize each evaluation result with a value that corresponds to the evaluation result, so as to store the above digitized value, for example. In the example of FIG. 24, it may be possible that "1" is stored in the case of the evaluation result of "worst" and "2" in the case of "inferior", and the like.

In the example illustrated in FIG. 24, the perceptual or sensory quality evaluation processing unit 240 uses three thresholds as relative evaluation indexes, for example, and however, it may also be possible to perform evaluation using one threshold, or to perform evaluation using two thresholds, four thresholds or more. Such thresholds are assumed to be stored in each memory of the perceptual or sensory quality evaluation processing unit 240 or the quality evaluation server 200.

In the evaluation by such relative evaluation indexes, not only the estimated perception quality value obtained by the first transition probability processing (S116), each estimated perception quality value obtained by the distribution state processing (S113), the dispersion degree processing (S114), the deviation degree processing (S115), the asymmetric discrete processing (S117), etc. may also be used.

For example, in the case of the estimated perception quality value obtained by the distribution state processing (S113), an estimated perception quality value is a normalized value PQS(n) of each quality index (for example, reception power level) and the number of each value PQS(n). The perceptual or sensory quality evaluation processing unit 240 performs the relative evaluation processing (S121) based on the normalized value PQS(n) and the number of each value PQS(n).

For example, the perceptual or sensory quality evaluation processing unit 240 compares a normalized value PQS(n) having the largest in number with each threshold (which may be one or plural). As the threshold, when a "quality reference value" illustrated in FIG. 19B is set, for example, if the normalized value PQS(n) having the largest in number is higher than the threshold (the right side in FIG. 19B), the perceptual or sensory quality of the picture that the viewer is viewing can be estimated to be "satisfactory", whereas if lower than the threshold, the perceptual or sensory quality can be estimated to be "deteriorated". It may be possible to obtain a more detailed evaluation result by use of a plurality of thresholds.

Also, in the case of the estimated perception quality value obtained by the dispersion degree processing (S114), an estimated perception quality value becomes a variance PQSDISTRIBUTION or a standard deviation $PQS_{STANDARD\ DEVIATION}$. In this case, the perceptual or sensory quality evaluation processing unit 240 compares the above variance PQSDISTRIBUTION or the standard deviation PQSSTANDARD DEVIATION with one or a plurality of thresholds to evaluate the perceptual or sensory quality.

For example, if the variance $PQS_{DISTRIBUTION}$ is higher than and including a threshold $\alpha$, and lower than and including $\beta$, it is possible to evaluate to be "inferior", and if the variance PQSDISTRIBUTION is higher than and including the threshold $\beta$, it is possible evaluate to be "slightly inferior", and the like. The perceptual or sensory quality evaluation processing unit 240 may evaluate by using either one of the variance $PQS_{DISTRIBUTION}$ and the standard deviation PQSSTANDARD DEVIATION, or both.

Further, in the case of the estimated perception quality value obtained by the deviation degree processing (S115), an estimated perception quality value is the degree of deviation $PQS_{DEVIATION}$ that is obtained from equation (3). In this case, the perceptual or sensory quality evaluation processing unit 240 compares the degree of $PQS_{DEVIATION}$ with one or a plurality of thresholds, to evaluate the perceptual or sensory quality to be, for example, "excellent" in the case of being larger than and including a threshold $\alpha$, and the like.

Further, the estimated perception quality value obtained by the asymmetric discrete processing (S117) is a variation width $\Delta f(n)$ that is weighted with an asymmetric discrete value. Evaluation on the variation width $\Delta f(n)$ can be made by the comparison of the variation width $\Delta f(n)$ between the maximum value $f(n)MAX$ and the minimum value $f(n)_{MIN}$ of quality indexes during an observation period with one or a plurality of thresholds. For example, by letting a threshold $\alpha=0$, the perceptual or sensory quality evaluation processing unit 240 can make evaluation as "deteriorated" if the variation width $\Delta f(n)$ is the threshold or smaller, or "satisfactory" if the variation width $\Delta f(n)$ is the threshold $\alpha$ or larger, and so on. Such relative evaluation processing (S121) also matches the evaluation result of such quality indexes as illustrated in FIG. 22B and FIG. 22C, for example.

The perceptual or sensory quality evaluation processing unit 240 can represent each evaluation result by a numeric value corresponding to the evaluation result, for example, even in the cases of the distribution state processing (S113), the dispersion degree processing (S114), the deviation degree processing (S115), the asymmetric discrete processing (S117), etc., and can also store the numeric value into the perceptual or sensory quality evaluation value DB 245. In regard to the evaluation result in each case, by the evaluation of the quality deterioration direction stronger than the improvement direction, it is possible to perform processing that matches the Asymmetric Tracking Model, for example.

As such, in the relative evaluation processing (S121), an evaluation result is obtained by evaluating the perceptual or sensory quality estimated in the perception quality estimation processing unit 220 using each threshold.

Additionally, as for the threshold, it is possible to change a predefined value according to a condition etc. For example, the change can be made according to a time and an area where the viewer is viewing, and the type of the viewed content.

For example, it may be possible to lower the threshold if the viewer is viewing the content in the daytime, so that a tolerable range for the viewer to view the content can be changed larger than before, or oppositely, to raise the threshold at night, so that a tolerable range for the viewer to view the content can be changed smaller than before. Also, it may be possible to raise the threshold if a place where the viewer is viewing is an urban area, and to lower the threshold if other than an urban area.

Although the evaluation result becomes different by the change of the threshold, it is possible to obtain an evaluation result according to the time and the place of viewing, the content type viewed by the viewer, etc. Such a change of threshold enables evaluation that matches human psychology such that, in the daytime, the number of viewers who view contents becomes increased as compared with the nighttime even with rather deteriorated quality, or at night, with better quality as compared with the daytime, for example. Therefore, it can be considered that the relative evaluation processing (S121) is processing in which a human psychological factor is taken into account.

Additionally, as to such time, place and content type, the perceptual or sensory quality evaluation processing unit 240 can obtain from the content viewing history DB 2031, and by the use thereof, can raise or lower the threshold. It is because, not only a past history, the information of the content type currently in view, the time and the place where the viewer is viewing is transmitted from the content server 100 and stored into the content viewing history DB 2031.

In the foregoing, the explanation is given on the details of the relative evaluation processing (S121). It may be possible for the perceptual or sensory quality evaluation processing unit 240 to store intact the evaluation result, obtained by the relative evaluation processing (S121) and the second transition probability processing (S121), into the perceptual or sensory quality evaluation value DB 245, or to further evaluate the perceptual or sensory quality by comparing the evaluation result with the past viewing history. Such processing is performed in the expected quality/viewing history comparison processing, for example. In the next item, an explanation is given on the expected quality/viewing history comparison processing.

<3.2.3 Expected quality/viewing history comparison processing>

Next, the explanation of the expected quality/viewing history comparison processing is given. In the expected quality/viewing history comparison processing, the perceptual or sensory quality evaluation processing unit 240 compares the perceptual or sensory quality evaluation value, obtained by the second transition probability processing (S120) or the relative evaluation processing (S121), with the past viewing history to further evaluate the perceptual or sensory quality.

For example, as illustrated in FIG. 24, the perceptual or sensory quality evaluation processing unit 240 compares the perceptual or sensory quality evaluation value (which, in the present item, is referred to as "current perceptual or sensory quality value" in some cases) obtained by the second transition probability processing (S120) or the relative evaluation processing (S121) with the past perceptual or sensory quality evaluation value (past evaluation value "x") included in the past viewing history, to measure how much difference (or how much distance) exists etc. The quality evaluation server 200 feeds back such a difference to the base station 500, so that the base station 500 can increase transmission power or feed back to the content server 100 to enable treatment such as making reflection in a view charge, for example.

For example, when the current perceptual or sensory quality value is higher than the past perceptual or sensory quality value, it can be estimated that the viewer is currently viewing a content with "satisfactory" quality as compared with the past, and in such a case, the information provider can raise the view charge higher than before, and the like.

Alternatively, it may also be possible for the perceptual or sensory quality evaluation processing unit 240 to detect that such a difference is within a predetermined range or out of the range. For example, the quality evaluation server 200 feeds back whether or not the difference is within the range to the base station 500, the content server 100, etc., to enable the base station 500 and the content server 100 to perform processing for some improvement on a content to be transmitted, to perform nothing, or the like.

In this case, it may also be possible for the perceptual or sensory quality evaluation processing unit 240 to compare the past perceptual or sensory quality value with the current perceptual or sensory quality value, and depending on whether or not the difference therebetween is within a predetermined range, evaluate whether the quality value is within a tolerable range allowed by the viewer to view the content or not in a tolerable range.

As mentioned earlier, when the past perceptual or sensory quality value is obtainable as the past history, the quality evaluation server 200 can grasp with what quality the viewer was viewing contents in the past. If a difference between the current perceptual or sensory quality evaluation value and the past perceptual or sensory quality evaluation value is within a certain range, the perceptual or sensory quality evaluation processing unit 240 can evaluate that the viewer is currently viewing within a quality range of viewing, and evaluate to be within a tolerable range. On the other hand, if the difference is not within the certain range, the perceptual or sensory quality evaluation processing unit 240 can decide that the current viewing is performed with quality that deviates from the past, and evaluate to be not in the tolerable range. As such, the perceptual or sensory quality evaluation processing unit 240 can also evaluate the current perceptual or sensory quality using the past perceptual or sensory quality.

In this case, the perceptual or sensory quality evaluation unit can also store, into the perceptual or sensory quality evaluation value DB 245, to which direction the current perceptual or sensory quality deviates. The reason is that, for example, there is a case of different processing between when the perceptual or sensory quality is in the direction of "deteriorating" (for example, the current perceptual or sensory quality value is low, such as "1" or "2", as compared with the others) and when in the direction of being "satisfactory" (for example, the current perceptual or sensory quality value is high, such as "4" or "5", as compared with the others).

For example, in the base station 500 and the content server 100 having received the feedback of the perceptual or sensory quality evaluation value, if the perceptual or sensory quality evaluation value is in the direction of "deteriorating", it is possible to increase transmission power or lower the charge than before. On the other hand, if the perceptual or sensory quality evaluation value is in the direction of being "satisfactory", it is possible to decrease transmission power or raise the charge than before.

As such, in the base station 500, the content server 100, etc., it is possible to change a treatment method depending on which direction the deviation is made, and for that purpose, the perceptual or sensory quality evaluation processing unit 240 can also store the direction of deviation into the perceptual or sensory quality evaluation value DB 245.

Additionally, in the aforementioned processing performed in the perceptual or sensory quality evaluation processing (for example, FIG. 16), it is explained whether or not the viewing history may be reflected (S82). For example, the perceptual or sensory quality evaluation processing unit 240 can decide the viewing history may be reflected when a difference between two perceptual or sensory quality values is a certain threshold or larger (Yes in S82). In this case, the perceptual or sensory quality evaluation processing unit 240 corrects the perceptual or sensory quality (S83). For example, the perceptual or sensory quality evaluation processing unit 240 corrects the estimated perceptual or sensory quality value in a manner to make "worse", and stores the corrected perceptual or sensory quality value into the perceptual or sensory quality evaluation value DB 245.

As such, by evaluating the estimated perception quality value, the perceptual or sensory quality evaluation processing unit 240 evaluates the perceptual or sensory quality of the picture that the viewer is viewing, so as to store the estimation result into the perceptual or sensory quality evaluation value DB 245, as the perceptual or sensory quality evaluation value. As the perceptual or sensory quality evaluation value, it is possible to form evaluation results to be "satisfactory", "deteriorated", etc., or each numeric value corresponding to each evaluation result. Alternatively, it may also be possible that the perceptual or sensory quality evaluation value is a difference between the past perceptual or sensory quality evaluation value and the current perceptual or sensory quality evaluation value, or the direction of deviation (for example, either the direction of being "deteriorated" or "satisfactory").

The perceptual or sensory quality evaluation value is appropriately read out by evaluation result notification processing, so as to be stored as a notification log and transmitted to the base station 500 and the content server 100. The base station 500, the content server 100, etc., on receiving the perceptual or sensory quality evaluation value, can perform various processing corresponding to the evaluation value. In the present embodiment, such treatment processing may be referred to as an "application using perceptual or sensory quality" in some cases. To increase transmission power in the base station 500 or to change a charge to be inexpensive by the information provider is one of such an application.

<4 Concerning application using perceptual or sensory quality>

Next, an explanation is given on the application using the perceptual or sensory quality. Before the explanation of a typical application, since a treatment method can be determined in the quality evaluation server 200 based on the perceptual or sensory quality evaluation value, the determination processing of the treatment method to be performed in the quality evaluation server 200 is explained first, and examples of the application is explained next.

<4.1 Treatment determination processing in quality evaluation server 200>

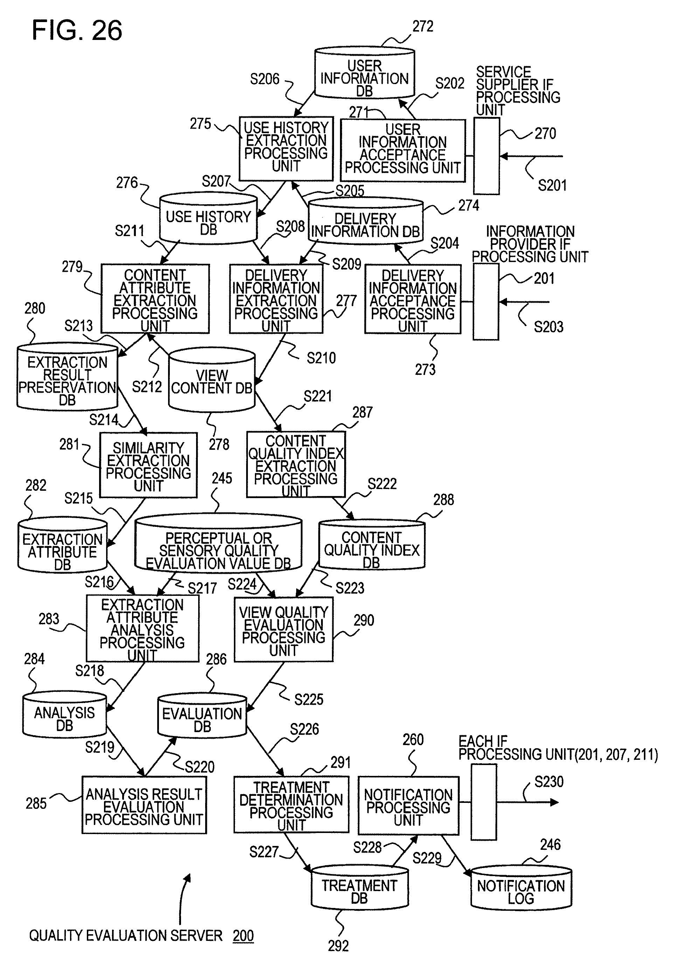

In the present item, an explanation is given on treatment determination processing in the quality evaluation server 200. FIG. 25 is a configuration example of the communication system 10, and FIG. 26 is a configuration example and an operation example of the quality evaluation server 200, respectively. FIG. 25 is, for example, the configuration example of the communication system 10 in which the present treatment determination processing is performed, and when such the communication system 10 is configured, the treatment determination processing as illustrated in FIG. 26 can be performed in the quality evaluation server 200.

The communication system 10 illustrated in FIG. 25 further includes a service user registrant server 150 that is managed by a service supplier. The service user registrant server 150 stores user information, for example. As the user information, for example, there are included information relative to the attribute of a user who receives content delivery, a use history, a perceptual or sensory quality value evaluated in the past, and so on.

As the user attribute information, a user name, a user ID, the date of birth, etc. can be included. The user attribute information can be stored in the service user registrant server 150 when the user registration is performed.

Also, as the use history, there are included a content type viewed in the past, a place of viewing, a viewing time, a viewer ID having viewed, etc. As to use history, for example, the service user registrant server 150 can receive a use history from the content server 100 each time on receiving a delivery request (for example, S1 in FIG. 3).

Further, the past perceptual or sensory quality evaluation value can appropriately be received from the quality evaluation server 200.

The service user registrant server 150 can appropriately transmit to the quality evaluation server 200 the user attribute information, the use history and the past perceptual or sensory quality evaluation value that are stored in a memory etc., as user information.

Incidentally, in the present item, there may be cases that the above-mentioned "viewer" is referred to as "user".

FIG. 26 is a diagram illustrating a configuration example of the quality evaluation server 200 and an operation example of the treatment determination processing. For example, to the quality evaluation server 200 illustrated in FIG. 9, configurations other than the perceptual or sensory quality evaluation value DB 245, the evaluation result notification processing unit 260, each IF processing unit and the communication log are newly added. Each of the above configurations will be explained successively at the explanation of the operation example.

In the treatment determination processing illustrated in FIG. 26, for example, based on the user attribute and the content delivery information currently viewed, a content feature is extracted, so that whether or not the feature is within a predetermined criterion range is analyzed, and a treatment method is determined according to the analysis result. In other words, according to the analysis result, the treatment determination processing determines a treatment policy for the content provider, such as (statistic) information of an actual state in the provision of a view content, and determines a treatment policy for the service provider, such as information for service selection to be provided to the viewer, for example.

The quality evaluation server 200 determines a treatment method like, for example, doing nothing if an obtained analysis result is within the criterion range, and a treatment method somewhat beneficial to the user if an obtained analysis result is out of the criterion range. As described earlier, the treatment method includes increasing or decreasing transmission power, changing a charge higher or lower, and the like.

The operation example of the treatment determination processing is explained by use of FIG. 26.

First, a service supplier IF processing unit 270, on receiving user information from the service user registrant server 150, outputs the user information to a user information acceptance processing unit 271 (S201), so that the user information acceptance processing unit 271 stores the received user information into a user information DB 272 (S202). Inclusive of the user information DB 272, each DB illustrated in FIG. 26 corresponds to each memory in the quality evaluation server 200, for example.

Also, an information provider IF processing unit 201, on receiving delivery information from the content server 100, outputs the delivery information to a delivery information acceptance processing unit 273 (S203), and the delivery information acceptance processing unit 273 stores the received delivery information into a delivery information DB 274 (S204).

The delivery information includes, for example, information such as the content itself currently viewed by the user, a content type, a copyright holder, the designation of an age rating, etc. Here, the delivery information may also include such information as a user ID currently receiving the delivery, a delivery time, a place of viewing, etc. The above information included in the delivery information is referred to as, for example, information indicative of the attribute of the delivery information. For example, the content server 100 etc. can transmit the delivery information stored in the content server 100 to the quality evaluation server 200, in response to a request from the user (for example, S1 in FIG. 3).

A use history extraction processing unit 275 reads out from the delivery information DB 274 the information indicative of the attribute of the delivery information (S205), and also reads out the user information of the viewer of concern from the user information DB 272 (S206). The use history extraction processing unit 275 extracts the use history of the user currently receiving the content delivery, for example. The use history extraction processing unit 275 stores into a use history DB 276 the extracted past use history and the information indicative of the attribute of the delivery information (of the content) currently viewed (S207).

A delivery information extraction processing unit 277 reads out the user ID from the use history DB 276 (S208), and also reads out the delivery information corresponding to the user from the delivery information DB 274 (S209). The delivery information extraction processing unit 277 already extracted the delivery information related to the content currently viewed by the user, and based on the extracted delivery information, stores the view content itself and the information indicative of the attribute (hereafter abbreviated to "view content") that is attached to the own content, into a view content DB 278 (S210). Here, the information indicative of the attribute attached to the own content is, for example, information embedded inside the content, such as information related to resolution etc. specified for each video scene.

A content attribute extraction processing unit 279 extracts the feature of the content currently viewed by the user, to store the feature into an extraction result preservation DB 280. For example, the content attribute extraction processing unit 279 extracts the feature or the tendency of the view content based on the use history of the user read out from the use history DB 276 (S211) and the view content, currently viewed by the viewer, that is read out from the view content DB 278 (S212). As a method of extraction, for example, a content type in the use history is compared with a content type in the delivery information, and among those inclusive of the both, a content type and an attribute having the largest number of use histories are extracted. It may also be possible that similar extraction is performed for the time and the place of viewing. The content attribute extraction processing unit 279 obtains the extracted feature or the tendency, for example, the type and the attribute of the content having the largest number of use histories, the time and the place of viewing, etc. as each extraction result, to store into an extraction result tentative preservation DB (S213).

A similarity extraction processing unit 281 reads out the extraction result stored in the extraction result tentative preservation DB (S214), and when the extracted past feature or the tendency also indicates the feature or the tendency in the currently viewed content, the similarity extraction processing unit 281 extracts each element thereof. The element to be extracted can be a content type, a time and a place of viewing, etc., for example.

For example, as a feature or a tendency, when a certain time of viewing is extracted by the content attribute extraction processing unit 279, if the viewing time of the currently viewed content is within the range of the past viewing time, the similarity extraction processing unit 281 extracts, as an extraction element, the viewing time as one of the elements of similarity. In this case, the similarity extraction processing unit 281 extracts the viewing time included in the delivery information or the viewing time included in the use history, or both of the above, to store into an extraction attribute DB 282.

The similarity extraction processing unit 281 compares the past feature or the tendency with the element of the currently viewed content, for example, thereby to extract the element and store into the extraction attribute DB 282 (S215).

Elements stored in the extraction attribute DB 282 are, for example, a content type, a time and a place of viewing, the combinations thereof, etc., in which a feature and a tendency extracted by the similarity extraction processing unit 281 are also indicated in the feature and the tendency in the content that is currently viewed. Hereinafter in some cases, an element stored in the extraction attribute DB 282 is referred to as a "content attribute".

Based on a content attribute (S216) read out from the extraction attribute DB 282, and quality (hereafter referred to as the perceptual or sensory quality evaluation value) (S217) currently perceived and bodily sensed by the viewer and read out from the perceptual or sensory quality evaluation value DB 245, an extraction attribute analysis processing unit 283 extracts a feature or a tendency about the content attribute.

For example, the extraction attribute analysis processing unit 283 compares a feature, a tendency, or the like included in the content attribute that the information provider (content supplier) expects when providing the content with the perceptual or sensory quality evaluation value the viewer actually feels at the content viewing. Then, for example, the extraction attribute analysis processing unit 283 extracts, as an analysis target element, an element in which the feature or the tendency expected by the information provider is coincident with or within a certain range from the perceptual or sensory quality evaluation value.

Alternatively, the extraction attribute analysis processing unit 283 compares quality included in the content attribute and specified for the content (for example, expected quality specified by the information provider at the provision of the content) with the perceptual or sensory quality evaluation value. The extraction attribute analysis processing unit 283 then extracts, as an analysis target element, an element included in the content attribute that corresponds to the specified quality when the specified quality is within the range of the perceptual or sensory quality evaluation value or is coincident therewith.

Then, the extraction attribute analysis processing unit 283 stores the above discrimination result into an analysis DB 284 together with the perceptual or sensory quality evaluation value. Also, the extraction attribute analysis processing unit 283 compares an element (for example, a viewing time, a content type, etc.) included in the content attribute with the past current element, so that can store an analysis result, such as being within a certain range, not within a certain range, etc., into the analysis DB 284.

The extraction attribute analysis processing unit 283 stores the extracted feature or the tendency into the analysis DB 284, as an analysis result (S218). What is stored in the analysis DB 284 is, for example, an element to be an analysis target (for example, the perceptual or sensory quality evaluation values in the past and the present, a quality condition designated or expected by the content supplier, etc.) from elements included in the content attribute.

An analysis result evaluation processing unit 285 reads out an element to be an analysis target from the analysis DB 284, to perform evaluation of the analysis result. As a method for evaluation, for example, it is possible to apply whether the extracted content attribute of an evaluation target is within the range of the feature analysis of the attribute, or whether or not the extracted content attribute is within the range of a reference value that is defined according to the attribute.

For example, when a feature or a tendency indicating that the viewing time is night is extracted by the extraction attribute analysis processing unit 283 (or the similarity extraction processing unit 281), the analysis result evaluation processing unit 285 discriminates that the above viewing time is concentrated within a certain range (for example, from 10 hours to 12 at night) or the like, to find out the feature or the tendency of content viewing of the viewer.

The analysis result evaluation processing unit 285 stores the content attribute and the evaluation result into an evaluation DB 286 (S220).

A content quality index extraction processing unit 287 extracts expected quality given to each view scene of the content and an index number of the content from a content stored in the view content DB 278 (S221), to store the extracted expected quality and the index number into a content quality index DB 288 (S222).

The expected quality is quality given to each content by an information provider, and is provided for a viewer or to be guaranteed, like expected quality of "3" for a goal scene in soccer and "1" for other cases, for example. Also, the index number is, for example, a time series index given to each content, such as a time record, a picture frame number, etc. By the index number and the expected quality, quality expected by the information provider in a certain scene or a locale can be designated. Such expected quality and an index number are included in the content, and the content quality index extraction processing unit 287 extracts the above expected quality and the index number from the view content DB 278 to store into the content quality index DB 288.

A view quality evaluation processing unit 290 reads out expected quality, an index number, etc. from a content quality index (S223), and reads out a perceptual or sensory quality evaluation value from the perceptual or sensory quality evaluation value DB 245 (S224), to compare the expected quality with the perceptual or sensory quality evaluation value to perform evaluation. As to evaluation, for example, the view quality evaluation processing unit 290 can perform evaluation according to whether or not a difference between the expected quality and the perceptual or sensory quality evaluation value is within a certain range.

For example, when the information provider designates expected quality for a certain scene and a locale in the content, whether the expected quality is within the range of viewer satisfaction can be discriminated according to whether or not the perceptual or sensory quality evaluation value is within the range of the expected quality or whether or not the expected quality is within the range of the perceptual or sensory quality evaluation value. By comparing between the two quality sets, the view quality evaluation processing unit 290 can discriminate whether or not the perceptual or sensory quality is within a certain range, and can store the discrimination result into the evaluation DB 286 (S225).

A treatment determination processing unit 291, based on the evaluation result evaluated by the analysis result evaluation processing unit 285 and the view quality evaluation processing unit 290, determines what treatment is to be provided for the viewer etc., to store a determined benefit into a treatment DB 292 (S227). For example, a treatment method includes reflection in a fee, an increase or decrease of transmission power, etc.

For example, consider a case when the analysis result evaluation processing unit 285 obtains an evaluation result such that a viewing time is within a certain range (for example, from 10 hours to 12 hours at night) and the view quality evaluation processing unit 290 obtains an evaluation result such that the perceptual or sensory quality evaluation value is lower than expected quality. In such a case, the treatment determination processing unit 291 discriminates that the quality of a content that the viewer is viewing is not satisfactory, so that can determine treatment to improve quality, like reducing the fee than before, increasing the transmission power than before, etc.

Alternatively, when there is obtained an evaluation result such that a viewing time is within a certain reference range and the perceptual or sensory quality evaluation value is higher than expected quality, the situation becomes as follows, for example. Namely, the treatment determination processing unit 291 discriminates that the viewer is viewing the content of concern with satisfactory quality, so that can determine a treatment method like tentatively raising a charge class higher than before.

The treatment determination processing unit 291 stores such the determined treatment method into the treatment DB 292 (S227).

The evaluation result notification processing unit 260 appropriately reads out the treatment method stored in the treatment DB 292, to transmit through each IF processing unit to the base station 500, the content server 100 or the service use registrant server 150 (S230). Also, on transmitting the treatment method, the evaluation result notification processing unit 260 may store the transmitted treatment method into a memory as a notification log (S229).

In the foregoing, the evaluation processing in the perceptual or sensory quality evaluation processing unit 240 is explained. The perceptual or sensory quality evaluation processing unit 240 decides the perceptual or sensory quality on the analysis result (or the perceptual or sensory quality estimation result) obtained in the perception quality estimation processing unit 220, for example, and determines from the result what benefit is to be provided for the viewer and the supplier. Such determination processing may also be considered to be a part of evaluation processing, for example.

For example, the perceptual or sensory quality estimation processing in the perception quality estimation processing unit 220 performs analysis by distribution state processing (S113) etc. based on the quality index measured at the terminal 600 and the base station 500, so that can estimate quality that the viewer is thought to be bodily sensing on the picture currently viewed. Then, in regard to the estimated perceptual or sensory quality, the perceptual or sensory quality evaluation processing unit 240 can evaluate the perceptual or sensory quality and determine benefit to be provided.

Accordingly, the present evaluation server 200 estimates and further evaluates the perceptual or sensory quality based on the quality index measured at the terminal 600 and the base station 500, and therefore, it is possible to evaluate the picture quality that the viewer is currently viewing without human intervention.

Also, if each measured quality index can be collected in real time from the terminal 600 and the base station 500, it becomes possible for the present evaluation server 200 to estimate and evaluate the perceptual or sensory quality in real time.

Further, at the base station 500 and the terminal 600, the measurement of each quality index is performed in radio communication processing, for example, and the present evaluation server 200 only collects such the quality index from the base station 500 and the terminal 600, and accordingly, quality can be evaluated without influence upon processing on radio communication performed in the base station 500, the terminal 600, etc.

<4.2 Concerning application using perceptual or sensory quality>

Next, an explanation is given on what application is performed based on the perceptual or sensory quality evaluated in the evaluation server 200 (for example, FIG. 9) and the determined treatment method (for example, FIG. 26).

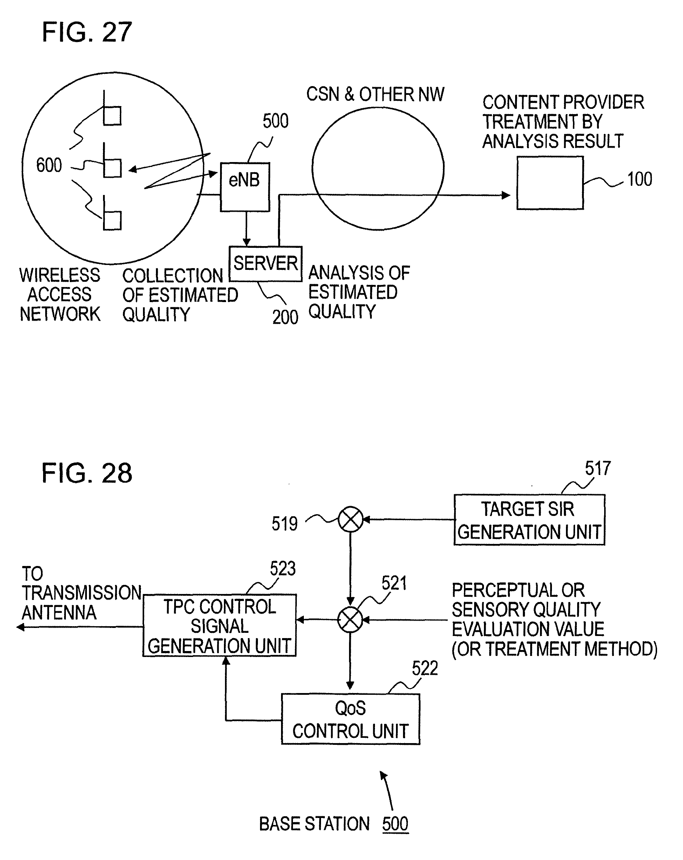

FIG. 27 is a diagram illustrating a configuration example of the communication system 10 including a server (for example, content server 100) of a content provider. The evaluation server 200 can obtain the evaluation result of the perceptual or sensory quality of a content that a viewer is viewing, and based on the above evaluation result, can provide a variety of kinds of benefit.

For example, when an evaluation result constantly continues in a state of poor perceptual or sensory quality (or when an evaluation result of "poor quality" is obtained continuously for a certain period), the evaluation server 200 can request the content server 100 to lower the resolution of an picture than before. Or, the content server 100 itself changes over to the provision of a low low-resolution content, or the like, based on the result from the evaluation server 200. Such a situation occurs in such a case that, for example, the terminal 600 is moving at high speed by Shinkansen, etc.

Alternatively, it may also be possible for the evaluation server 200 to transmit to the content server 100 (or the content provider) information such as a reading environment (time, place, etc.) of the viewer along with the evaluation result. By the transmission of the viewer reading information in addition to the evaluation result to the content server 100, it may also be possible for the content provider to perform a continuous survey on a viewer satisfaction level (including that the quality is inferior, etc.). For example, the evaluation server 100 can obtain the position information etc. of the terminal 600 (or the viewer) through the MME interface 205 (for example, FIG. 8). Therefore, by adding the above position information to the evaluation result as information of the reading environment of the viewer, the perceptual or sensory quality evaluation processing unit 240 can transmit the information of the viewer reading environment from the evaluation server 200.

Further, in addition to the evaluation result and the viewer reading environment, the evaluation server 200 can also add other information, such as the base station 500 currently in suspension, to transmit to the content server 100. For example, the evaluation server 200 obtains information related to the base station 500 currently suspended through the service supplier IF processing unit 270 in FIG. 26, so that can transmit through the content server IF 201. When a content view area exists in the vicinity of the base station 500 currently suspended, the content supplier can perform a satisfaction level survey etc. by taking into consideration that an evaluation result in the above area is relatively reduced in comparison with an evaluation result in a normal area.

The content supplier etc. can improve content delivery etc. based on the perceptual or sensory quality of the viewer, and can aim to improve service quality as compared with a case when no evaluation is performed in the evaluation server 200.

Another application example will be explained. FIG. 28 is a diagram illustrating a configuration example of a part related to transmission power control in the base station 500. In the example, the base station 500 receives the perceptual or sensory quality from the quality evaluation server 200 and improves service quality based on the perceptual or sensory quality.

For example, the base station 500, when obtaining an evaluation result such that the deterioration of the perceptual or sensory quality of a user is estimated, tentatively raises a QoS rank higher than before, so that can aim to improve the service quality of the provided content. Or, when obtaining an evaluation result such that the perceptual or sensory quality of the user is continuously satisfactory, it may also be possible for the base station 500 to lower the QoS rank within a tolerable range, aiming at effective utilization of a radio resource in the base station 500.

In other words, based on the evaluation result of the perceptual or sensory quality, it is possible for the base station 500 to maintain the quality level intact for a user who requested high quality, and to transmit the content to a user who does not mind quality so much with a quality level that much. In regard to the evaluation result of perceptual or sensory quality, by obtaining the evaluation result for each user, it may also be possible for the base station 500 to aim to provide a different service for each user.

FIG. 28 illustrates a basic configuration aiming at a quality position in a radio section for applying the perceptual or sensory quality to transmission power control, for example. In the example of FIG. 28, in a synthesis unit 521 of the base station 500, the evaluation value of perceptual or sensory quality is synthesized with a target SIR (Signal to Interface Ratio) generated in a target SIR generation unit 517, so as to be output to a QoS control unit 522 and a TPC control signal generation unit 523. For example, when the perceptual or sensory quality evaluation value is an evaluation result that represents deterioration, the QoS control unit 522 instructs the TPC control signal generation unit 523 to increase transmission power in order to raise the QoS rank. On the other hand, for example, when the perceptual or sensory quality evaluation value is an evaluation result that represents being satisfactory, the QoS control unit 522 instructs the TPC control signal generation unit 523 to decrease transmission power in order to lower the QoS rank within a tolerable range. Based on such an instruction from the QoS control unit 522, the TPC control signal generation unit 523 generates a TPC control signal to transmit to the terminal 600. According to the TPC control signal, the terminal 600 increases or decreases transmission power, so that can maintain radio communication quality between with the base station 500 to be constant. For example, the terminal 600 decreases the transmission power lower than before when the perceptual or sensory quality is satisfactory, whereas increase the transmission power higher than before when the perceptual or sensory quality is deteriorated. By this, it is possible to perform transmission power control according to the perceptual or sensory quality for each user.

As an example related to the application, there is also such one as follows, for example. Namely, among users using a pay service, it may also be possible to differently allocate a radio resource according to the perceptual or sensory quality in between a user belonging to a certain class or higher (hereafter referred to as "preferential subscriber" in some cases) and a user belonging to another class (hereafter referred to as "non-preferential subscriber" in some cases), for example.

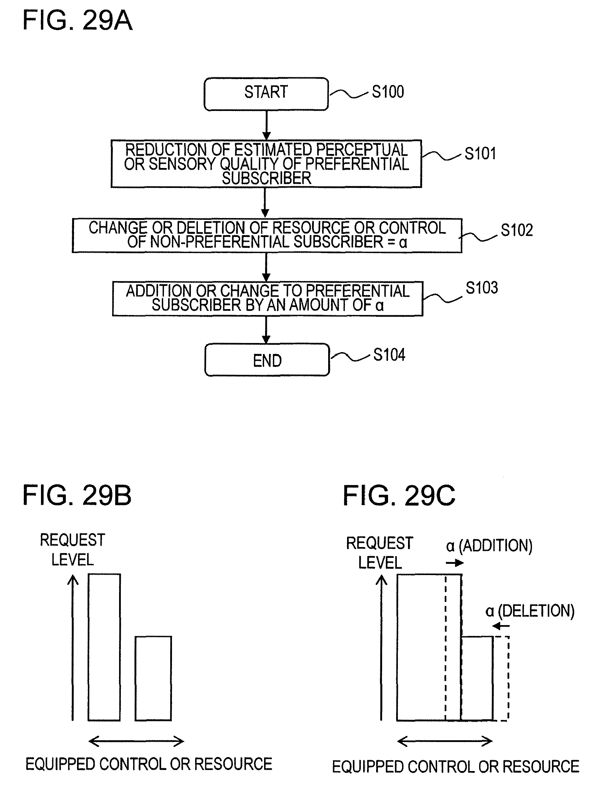

FIG. 29A is a flowchart illustrating an operation example in the base station 500 when such an above-mentioned application is performed, and FIG. 29B and FIG. 29C are diagrams illustrating each example when radio resource allocation is changed.

For example, as illustrated in FIG. 29B, it is assumed that the request level of the preferential subscriber for quality etc. related to content viewing is higher than the request level of the non-preferential subscriber. The base station 500, when obtaining an evaluation result such that the perceptual or sensory quality for the preferential subscriber is reduced (S100, S101), cuts down the radio resource of the non-preferential subscriber by an amount of $\alpha$, so as to add the cut $\alpha$ to the preferential subscriber (S102-S104, FIG. 29C). For example, such control is performed in the radio channel control unit 536 (for example, FIG. 6) etc., and the radio channel control unit 536 obtains the perceptual or sensory quality evaluation value from the quality evaluation server 200 through the external interface 540, so that can perform processing as illustrated in FIG. 29A.

<5 Another example>

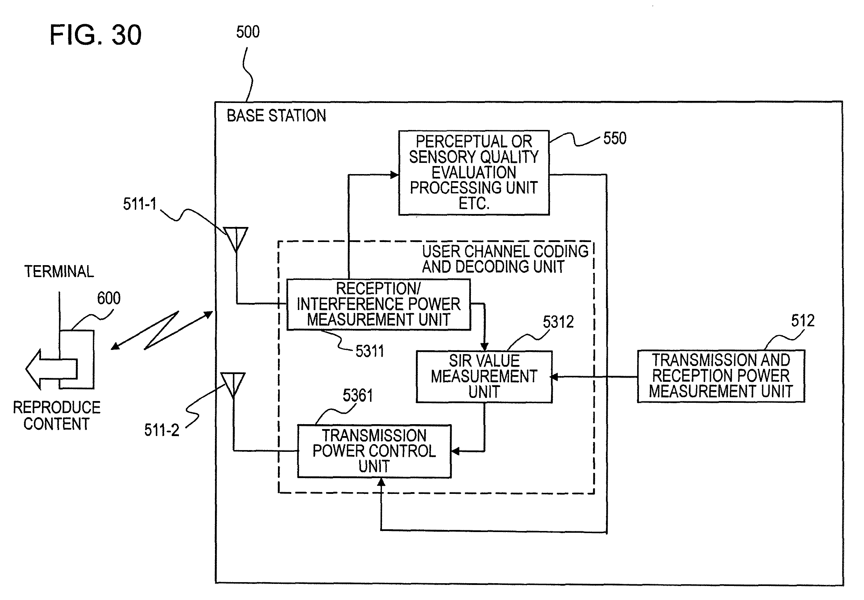

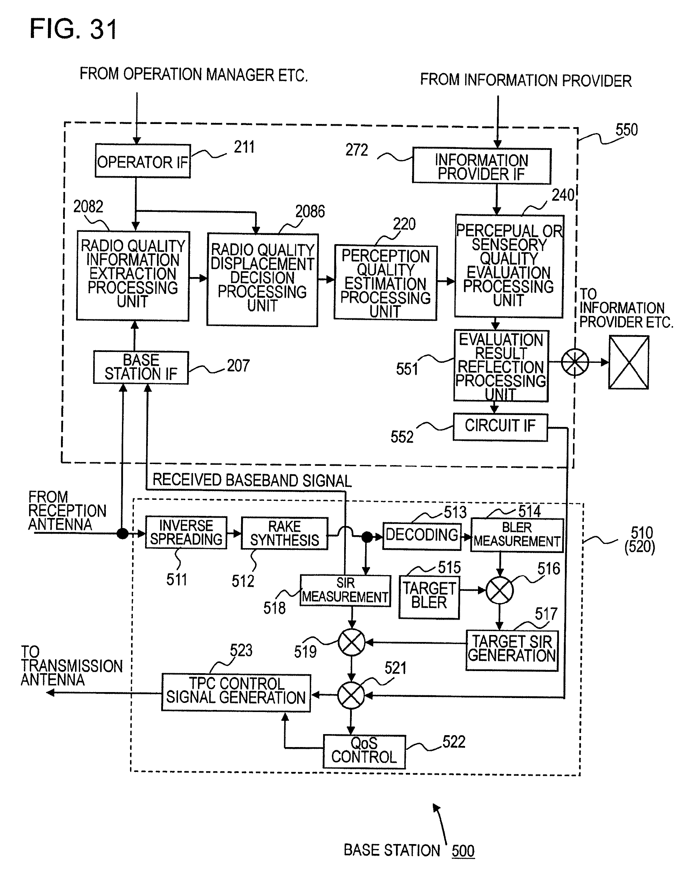

Next, an explanation is given on another example. In the above-mentioned example, the explanations have been given on each example in which the estimation and the evaluation of perceptual or sensory quality are performed in the quality evaluation server 200. It may also be possible that the estimation and the evaluation of the perceptual or sensory quality are performed in the base station 500, for example. In the present example, an explanation is given on an example in which the estimation and the evaluation of the perceptual or sensory quality are performed in the base station 500. FIG. 30 and FIG. 31 are diagrams respectively illustrating configuration examples of the base station 500 in the present example. For example, FIG. 30 illustrates a basic configuration of the base station 500 in the embodiment of the present invention, and FIG. 31 illustrates an implementation functional block in the above embodiment using a CDMA system.

In the base station 500, transmission power control may be performed in some cases. For example, by performing transmission power control for controlling the transmission power of the terminal 600 based on the radio communication quality between with the terminal 600, it is possible to retain the radio communication quality between with the terminal 600 at a constant level. In the present example, the base station 500 performs processing related to the above transmission power control, such as thinning out the processing thereof based on the perceptual or sensory quality. By this, in the present example, it is possible to maintain radio quality along the perceptual or sensory quality of a user, and also to aim at efficient transmission power control.

In the example of FIG. 30, a reception/interference power measurement unit 5311 measures reception power and interference power on a radio signal received by a reception antenna 511-1, to output to an SIR value measurement unit 5312. The SIR value measurement unit 5312 measures an SIR value from the reception power, the interference power and transmission and reception power received from a transmission and reception power measurement unit 512, to output to a transmission power control unit 5361. The transmission power control unit 5361 compares the SIR value measured by the SIR value measurement unit 5312 with a target SIR value, to thereby control an increase or decrease of transmission power to the terminal 600.

When such processing is performed, the base station 500 further includes a processing block 550 like the perceptual or sensory quality evaluation processing unit 240 in the quality evaluation server 200. The details of the processing block 550 are illustrated in FIG. 31, for example. In the example illustrated in FIG. 31, the processing block 550 includes the base station IF 207, a quality information extraction processing unit 2082, then operator IF 211, a radio quality displacement decision processing unit 2086, a perception quality estimation processing unit 220, an information provider IF 272, the perceptual or sensory quality evaluation processing unit 240, an evaluation result reflection processing unit 551 and a circuit IF 552. Here, the same signs are attached to the same processing blocks in FIG. 28.

In the processing block 550, blocks other than the evaluation result reflection processing unit 551 and the circuit IF 552 is explained in FIG. 6 etc., and therefore the explanation of these blocks in the present example is omitted.

The evaluation result reflection processing unit 551, in response to a perceptual or sensory quality evaluation value received from the perceptual or sensory quality evaluation processing unit 240, either expands each execution interval of transmission power control (intermittent execution interval) or narrows the execution interval (high-speed execution interval) as compared with the interval before, to change the execution interval of the transmission power control. The execution interval after the change is output through a circuit IF 293 and a synthesis unit 521 to a TPC control signal generation unit 523. The TPC control signal generation unit 523, in accordance with the execution interval reported from the evaluation result reflection processing unit 551, outputs a TPC control signal to a transmission antenna 511-2.

For example, when the perceptual or sensory quality evaluation value represents a higher or a lower value as compared with a certain reference value, the evaluation result reflection processing unit 551 can change the execution interval of the transmission power control according to the above state.

The TPC control signal generation unit 523 receives the perceptual or sensory quality evaluation value from the perceptual or sensory quality evaluation processing unit 240 through the evaluation result reflection processing unit 551 etc., so that can perform transmission power control that matches the perceptual or sensory quality of the user. For example, as explained in <4.2 Concerning application using perceptual or sensory quality>, it is possible to increase or decrease the transmission power of the terminal 600 according to the perceptual or sensory quality evaluation value.

Also, because the execution interval of the transmission power control performed in the base station 500 is changed according to the perceptual or sensory quality, an opportunity of transmission power control performed according to the perceptual or sensory quality is also changed, and thus, it is also possible to aim to achieve efficient processing of the transmission power control.

The above-mentioned example is explained on the example in which the estimation and the evaluation of perceptual or sensory quality are performed in the base station 500. For example, it is also possible to perform the estimation and the evaluation of perceptual or sensory quality in the ME 400 connected to a core network. For example, it is possible to execute if a processing block 550 as illustrated in FIG. 31 is provided in the MME 400.

[Third embodiment]

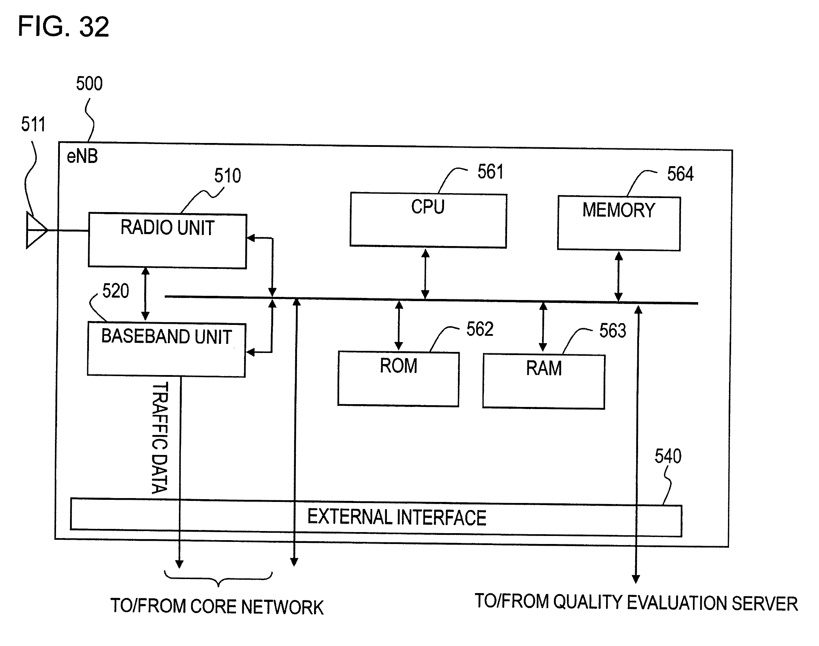

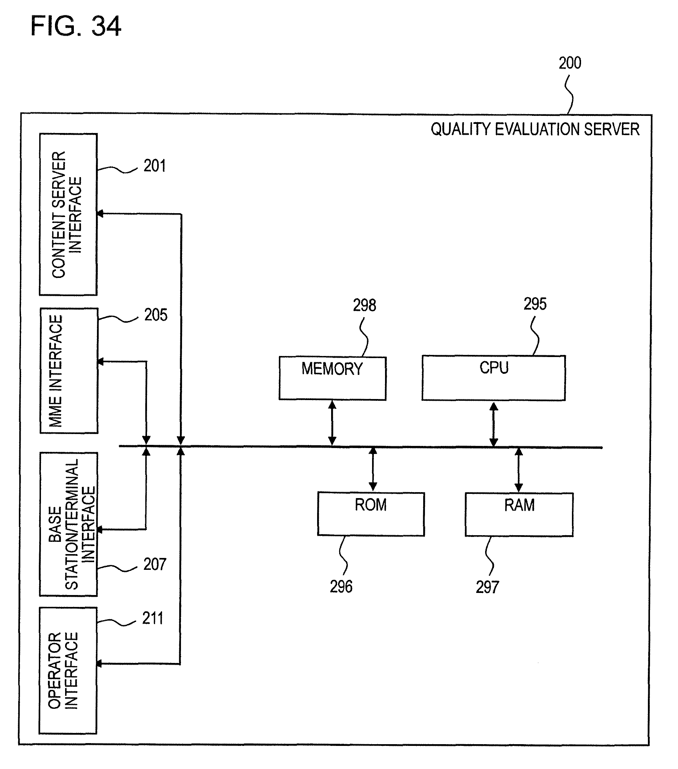

Next, an explanation is given on a third embodiment. In the second embodiment, as the configuration examples of the base station 500, the terminal 600 and the quality evaluation server 200, for example, there have been explained the examples capable of implementation using the configuration examples illustrated in FIG. 6 to FIG. 8. For example, the base station 500, the terminal 600 and the quality evaluation server 200 can also be implemented by configuration examples illustrated in FIG. 32 to FIG. 34.

The base station 500 further includes a CPU (Central Processing Unit) 561, a ROM (Read Only Memory) 562, a RAM (Random Access Memory) 563 and a memory 564.

The CPU 561 corresponds to the quality index detection unit 531, the request acceptance unit 532, the target subscriber quality index extraction unit 533, the quality index transmission processing unit 535 and the radio channel control unit 536 in the second embodiment, for example. The CPU 561 reads out a program stored in the ROM 562 to load on the RAM 563 and execute the program, so that can execute processing in the quality index detection unit 531 etc.

Additionally, the memory 564 corresponds to the quality index storage unit 534 in the second embodiment, for example.

The terminal 600 further includes a CPU 661, a ROM 662, a RAM 663 and a memory 664.

The CPU 661 corresponds to the quality index detection unit 631, the moving picture reproduction application 632, the request acceptance unit 633, the quality index transmission processing unit 635 and the radio channel control unit 636 in the second embodiment, for example. The CPU 561 also reads out a program stored in the ROM 662 to load on the RAM 663 and execute the program, so that can execute processing in the quality index detection unit 631 etc.

Additionally, the memory 664 corresponds to the quality index storage unit 634 in the second embodiment, for example.

The quality evaluation server 200 further includes a CPU 295, a ROM 296, a RAM 297 and a memory 298.

The CPU 295 corresponds to the content information reception unit 202, an MME interface 205, the quality index collection processing unit 206, the quality index reception unit 208, the operation condition reception unit 212, the perception quality estimation processing unit 220, the perceptual or sensory quality evaluation processing unit 240 and the evaluation result notification processing unit 260 in the second embodiment, for example.

Also, for example, the CPU 295 corresponds to the user information acceptance processing unit 271, the delivery information acceptance processing unit 273, the use history extraction processing unit 275, the delivery information extraction processing unit 277, the content attribute extraction processing unit 279, the similarity extraction processing unit 281, the extraction attribute analysis processing unit 283, the analysis result evaluation processing unit 285, the content quality index extraction processing unit 287, the view quality evaluation processing unit 290 and the treatment determination processing unit 291 in the second embodiment.

The CPU 295 reads out a program stored in the ROM 296 to load on the RAM 297 and execute the program, so that can execute processing in the content information reception unit 202 etc.

Additionally, the memory 298 corresponds to the content information storage unit 203, the quality index storage unit 209 and the operation condition storage unit 213. Also, the memory 298 stores the quality index displacement value DB 2092, the estimated perception quality value 230, the perceptual or sensory quality evaluation value DB 245 and the notification log 246 in the second embodiment, for example. Further, the memory 298 stores the user information DB 272, the delivery information DB 274, the use history DB 276, the view content DB 278, the extraction result preservation DB 280, the extraction attribute DB 282, the analysis DB 284, the evaluation DB 286, the content quality index DB 288 and the treatment DB 292 in the second embodiment, for example.

For example, the CPU 295 can perform processing such as the estimation and the evaluation of perceptual or sensory quality explained in the second embodiment.

REFERENCE SIGNS LIST

    10: Communication system
    100: Content server
    150: Service user registrant server
    200: Quality evaluation server
    201: Content server interface (information provider IF)
    202: Content information reception unit
    203: Content information storage unit
    2031: Content viewing history DB
    205: MME interface
    206: Quality index collection processing unit
    207: Base station/terminal interface
    208: Quality index reception unit
    2081: Radio quality information acceptance processing unit

2082: Radio quality information extraction processing unit

2083: Decision condition extraction processing unit

2084: Extraction information DB

2085: Decision condition DB

2086: Radio quality displacement decision processing unit

209: Quality index storage unit

2091: Quality information DB

2092: Quality displacement value DB

212: Operation condition reception unit

213: Operation condition storage unit

220: Perception quality estimation processing unit

230: Estimated perception quality value DB

240: Perceptual or sensory quality evaluation processing unit

245: Perceptual or sensory quality evaluation value DB

250: Perception quality estimation processing unit

251: Quality evaluation processing unit

260: Evaluation result notification processing unit

270: Service supplier IF processing unit

271: User information acceptance processing unit

273: Delivery information acceptance processing unit

274: Delivery information DB

275: Use history extraction extraction processing unit

276: Use history DB

277: Delivery information extraction processing unit

278: View content DB

279: Content attribute extraction processing unit

280: Extraction result preservation DB

281: Similarity extraction processing unit

282: Extraction attribute DB

283: Extraction attribute analysis processing unit

284: Analysis DB

285: Analysis result evaluation processing unit

286: Evaluation DB

287: Content quality index DB

290: View quality evaluation processing unit

291: Treatment determination processing unit

292: Treatment DB

298: Memory

400: MME

500: Radio base station apparatus (base station)

523: TPC control signal generation unit

530: Control function unit

531: Quality index detection unit

534: Quality index storage unit

536: Radio channel control unit

540: External interface

551: Evaluation result reflection processing unit

564: Memory

600: Terminal apparatus (terminal)

630: Control function unit

631: Quality index detection unit

632: Moving picture reproduction application

634: Quality index storage unit

636: Radio channel control unit

664: Memory

**Claims**

1. A quality evaluation apparatus for evaluating quality of a picture transmitted from a radio base station apparatus to a terminal apparatus, the apparatus comprising:

   a perception quality estimation processing unit configured to estimate the quality of picture viewed at the terminal apparatus based on quality of a radio section between the radio base station apparatus and the terminal apparatus; and
   a quality evaluation processing unit configured to output an evaluation result evaluated the estimated quality of picture.

2. The quality evaluation apparatus according to claim 1, wherein the perception quality estimation processing unit is configured to estimate the quality of picture so that an absolute value of a first estimation value in case that the quality of the radio section is lower than a first threshold value is higher than an absolute value of a second estimation value in case that the quality of the radio section is higher than the first threshold value.

3. The quality evaluation apparatus according to claim 2, wherein the perception quality estimation processing unit is configured to normalize first to third quality, weight to the normalized first to third quality so that the absolute value of the first estimation value is higher than the absolute value of the second estimation value, calculate a first transition probability that the quality of picture advances and a second transition probability that the quality of picture reduces based on a displacement of the weighted first to third quality, and estimate the first and second transition probabilities as the quality of picture.

4. The quality evaluation apparatus according to claim 1, wherein the perception quality estimation processing unit is configured to weight to a variation width so that an absolute value of a weighted value to the variation width of the first and second quality of the radio section in case that a difference of a maximum value and minimum value of the quality of the radio section in prescribed period is a negative value, is higher than an absolute value of a weighted value to the variation width in case that the difference of the maximum value and minimum value is a positive value, and estimate the weighted variation width as the quality of picture.

5. The quality evaluation apparatus according to claim 1, wherein the quality evaluation processing unit is configured to output the evaluation result that a first evaluation result in case that the estimated quality of picture is lower than a second threshold value is lower than a second evaluation result with respect to the quality.

6. The quality evaluation apparatus according to claim 3, wherein the quality evaluation processing unit is configured to output an evaluation result that the evaluation result in case that the second transition probability is higher than the first transition probability and a difference of the first and second transition probabilities is more than a third threshold value is lower than the evaluation result in case that the second transition probability is higher than the first transition probability and the difference of the first and second probabilities is less than the third threshold value, with respect to the quality.

7. The quality evaluation apparatus according to claim 6, wherein the quality evaluation processing unit is configured to vary the third threshold value according to a time on or a place at which the picture is viewed, or a kind of content in case that the picture is transmitted to the terminal apparatus as the content.

8. The quality evaluation apparatus according to claim 5, wherein the quality evaluation processing unit is configured to output a comparison result of a first evaluation result evaluated the estimated quality of picture with a second evaluation result included in viewing history of a viewer viewing the picture.

9. The quality evaluation apparatus according to claim 8, wherein the quality evaluation processing unit is configured to output whether or not a difference of the first and second evaluation results is within a first range.

10. The quality evaluation apparatus according to claim 8, wherein the quality evaluation processing unit is configured to output an evaluation result indication of whether the estimated quality of picture is lower or higher based on the comparison result of the first and second evaluation results.

11. The quality evaluation apparatus according to claim 1, further comprising a collection processing unit configured to collect from the radio base station apparatus the quality of radio section measured by the radio base station apparatus or collect from the terminal apparatus via the radio base station apparatus the quality of radio section measured by the terminal apparatus, and output the collected quality of radio section to the perception quality estimation processing unit.

12. The quality evaluation apparatus according to claim 11, further comprising a collection processing unit configured to instruct collection of the quality of radio section to the radio base station apparatus accommodating the terminal apparatus for delivery destination on receiving a quality information collection instruction form a content server which delivers the picture as a content to the terminal apparatus via the radio base station apparatus, and instruct to the content server collection of the quality of radio section to the terminal apparatus for delivery destination.

13. The quality evaluation apparatus according to claim 12, wherein the collection processing unit is configured to instruct to the radio base station apparatus transmission of the quality of radio section measured by the radio base station apparatus on receiving a content delivery completion notification form the content server, and collect from the radio base station apparatus the quality of radio section measured by the radio base station apparatus based on the instruction.

14. The quality evaluation apparatus according to claim 12, wherein the collection processing unit is configured to receive successively from the radio base station apparatus the quality of radio section measured by the radio base station apparatus, and instruct to the radio base station apparatus measurement completion of the quality of radio section on receiving the content delivery completion notification from the content server.

15. The quality evaluation apparatus according to claim 1, further comprising a quality information reception unit configured to receive information relating to an operation condition and output to the perception quality estimation processing unit the quality of radio section which matches or satisfies the operation condition.

16. The quality evaluation apparatus according to claim 1, further comprising:

    an user information acceptance processing unit configured to input user information relating to a user viewing the picture;
    a delivery information acceptance processing unit configured to input delivery information relating to the content in case that the picture is transmitted to the terminal apparatus as a content; and
    a treatment determination processing unit configured to determinate a treatment method to be provided based on the user information, the delivery information, and the evaluation result, and output the determined treatment method.

17. The quality evaluation apparatus according to claim 16, wherein the treatment determination processing unit is configured to determinate the treatment method based on whether or not an attribute included in the user information is within a second range and whether or not the evaluation result is within a range of quality which is included in the delivery information and is expected by an information provider.

18. The quality evaluation apparatus according to claim 16, wherein the treatment method indicates an increase or decrease of transmission power in case that the radio base station apparatus transmits the picture, or high or low of a fee in case that the picture is viewed.

19. The quality evaluation apparatus according to claim 1, wherein the quality evaluation processing unit is configured to transmit the evaluation result and location information acquired from a location management server to a content server which delivers the picture as a content to the terminal apparatus via the radio base station apparatus.

20. The quality evaluation apparatus according to claim 1, wherein
    the quality evaluation processing unit is configured to transmit the evaluation result to the radio base station apparatus, and
    the radio base station apparatus performs change of QoS rank or radio resource allocation, or change of transmission power to the terminal apparatus.

21. A quality evaluation method in a quality evaluation apparatus for evaluating quality of a picture transmitted from a radio base station apparatus to a terminal apparatus, the method comprising:

    estimating the quality of picture viewed at the terminal apparatus based on quality of a radio section between the radio base station apparatus and the terminal apparatus; and
outputting an evaluation result evaluated the estimated quality of picture.

22. A communication system comprising:

  a radio base station apparatus;
  a terminal apparatus; and
  a quality evaluation apparatus, wherein
  the radio base station apparatus or the terminal apparatus includes a quality measurement unit configured to measure quality of a radio section between the radio base station apparatus and the terminal apparatus, and
  the quality evaluation apparatus includes:

    a perception quality estimation processing unit configured to estimate quality of a picture viewed at the terminal apparatus based on the quality measured by the radio base station apparatus or the terminal apparatus, and
    a quality evaluation processing unit configured to output an evaluation result evaluated the estimated quality of picture.

23. A radio base station apparatus for performing radio communication with a terminal apparatus, the apparatus comprising:

  a perception quality estimation processing unit configured to estimate quality of a picture viewed at the terminal apparatus based on quality of a radio section, measured by the terminal apparatus or the radio base station apparatus, between the radio base station apparatus and the terminal apparatus; and
  a quality evaluation processing unit configured to output an evaluation result evaluated the estimated quality of picture.

## FIG. 1

TERMINAL
APPARATUS

RADIO BASE
STATION
APPARATUS

QUALITY

200

QUALITY EVALUATION
APPARATUS

CONTENT
(PICTCURE)

600

500

250

PERCEPTION QUALITY
ESTIMATION
PROCESSING UNIT

251

QUALITY
EVALUATION
PROCESSING UNIT

OUTPUT

COMMUNICATION SYSTEM 10

# FIG. 2

QUALITY INDEX (S12)

MOVE (HANDOVER)

CONTENT(S9)

600 UE

600 UE

MOBILE TERMINAL

500-1

eNB

HANDOVER

eNB

500-2

RADIO ACCESS NETWORK

PUBLIC (MOBILE) COMMUNICATION NETWORK

MME 400

INSTRUCTION/ QUALITY INDEX (S7)

QUALITY EVALUATION SERVER 200

INSTRUCTION (S4)

100

CONTENT SERVER

COMMUNICATION SYSTEM **10**

EP 2 833 625 A1

## FIG. 3

# FIG. 4

# FIG. 5

# FIG. 6

EP 2 833 625 A1

# FIG. 7

600 UE

630 CONTROL FUNCTION UNIT

631 QUALITY INDEX DETECTION UNIT

634 QUALITY INDEX STORAGE UNIT

633 REQUEST ACCEPTANCE UNIT

635 QUALITY INDEX TRANSMISSION PROCESSING UNIT

636 RADIO CHANNEL CONTROL UNIT

632 MOVING PICTURE REPRODUCTION APPLICATION

610 RADIO UNIT

611

620 BASEBAND UNIT

650 VOICE INPUT AND OUTPUT UNIT

640 DISPLAY UNIT

QUALITY INDEX TRANSMISSION

EP 2 833 625 A1

# FIG. 8

200

QUALITY EVALUATION SERVER

201
CONTENT SERVER INTERFACE

202
CONTENT INFORMATION RECEPTION UNIT

203
CONTENT INFORMATION STORAGE UNIT

240
PERCEPTUAL OR SENSORY QUALITY EVALUATION PROCESSING UNIT

260
EVALUATION RESULT NOTIFICATION PROCESSING UNIT

205
MME INTERFACE

206
QUALITY INDEX COLLECTION PROCESSING UNIT

220
PERCEPTION QUALITY ESTIMATION PROCESSING UNIT

207
BASE STATION/TERMINAL INTERFACE

208
QUALITY INDEX RECEPTION UNIT

209
QUALITY INDEX STORAGE UNIT

213
OPERATION CONDITION STORAGE UNIT

211
OPERATOR INTERFACE

212
OPERATION CONDITION RECEPTION UNIT

# FIG. 9

FIG. 10

START — S20

↓

COLLECT
MEASUREMENT DATA — S21(S100)

↓

HOUSE SELECTED QUALITY INDEX INTO THE
QUALITY INDEX DB — S23(S101)

↓

END — S24

FIG. 11

START — S30

↓

ACCEPT OPERATION
CONDITION — S31(S102)

↓

HOUSE THE ACCEPTED CONDITIONS INTO
THE OPERATION CONDITION DB — S32

↓

END — S33

## FIG. 12A

2091

QUALITY
INFORMATION
DB

S104

S40

START

S105

213

OPERATION
CONDITION DB

EXTRACT OR SELECT DESIRED QUALITY
INFORMATION

S41

HOUSE THE EXTRACTED OR SELECTED QUALITY
INDEX INTO THE EXTRACTION INFORMATION DB

S42(S107)

END

S43

## FIG. 12B

QUALITY INFORMATION DB 2091(209)

CONDITIONS TO BE
APPLIED TO
PROCESSING
CONDITION DB

## FIG. 13

START — S50

OPERATION CONDITION DB — 213

EXTRACT CONDITION TO BE APPLIED — S51 — S105

HOUSE THE EXTRACTED CONDITION INTO THE DECISION CONDITION DB — S52(S108)

END — S53

## FIG. 14

EXTRACTION INFORMATION DB — 2084 — S109

START — S60

DECISION CONDITION DB — 2085 — S110

EXTRACT A QUALITY INDEX HAVING A DISPLACEMENT TO BE PERFORMED ESTIMATION AND EVALUATION PROCESSING — S61

HOUSE THE EXTRACTED RESULT INTO THE QUALITY DISPLACEMENT VALUE DB — S62(S111)

END — S63

## FIG. 15

```
                                                          2092
                                              ┌ ─ ─ ─ ─ ─ ─ ─ ┐
                                              │  QUALITY      │
        ┌──────────────┐                      │ DISPLACEMENT  │
        │    START     │────S70               │   VALUE DB    │
        └──────────────┘                      └ ─ ─ ─ ─ ─ ─ ─ ┘
                │                              ↙  S112
                ▼                       .
        ┌────────────────────┐  ↖
        │  FEATURE ANALYSIS OF │──────S71
        │ THE DISPLACEMENT OF A│
        │ TARGET QUALITY INDEX │
        └────────────────────┘
                │
                ▼
        ┌──────────────────────────────┐
        │ HOUSE THE ANALYSIS RESULT INTO THE│────S72(S113)
        │ ESTIMATED PERCEPTION QUALITY VALUE DB│
        └──────────────────────────────┘
                │
                ▼
        ┌──────────────┐
        │     END      │────S73
        └──────────────┘
```

## FIG. 16

```
                                                          230
                                              ┌ ─ ─ ─ ─ ─ ─ ─ ┐
                                              │  ESTIMATED    │
        ┌──────────────┐                      │  PERCEPTION   │
        │    START     │────S80               │   VALUE DB    │
        └──────────────┘                      └ ─ ─ ─ ─ ─ ─ ─ ┘
                │                              ↙  S119
                ▼
        ┌──────────────────────────────┐
        │ ADD A PSYCHOLOGICAL FACTOR TO THE │────S81
        │ DISPLACEMENT OF A TARGET PERCEPTION│
        │           INDEX               │
        └──────────────────────────────┘
                │
                ▼
              ◇ S82
     NO      ╱ IS ╲
   ◀────────╱ THE REFLECTION OF ╲
           ╲ VIEWING HISTORY ╱                        2031
            ╲ NEEDED? ╱                    ┌ ─ ─ ─ ─ ─ ─ ─ ┐
              ◇                            │   VIEWING     │
                │  YES              S124   │  HISTORY DB   │
                ▼                          └ ─ ─ ─ ─ ─ ─ ─ ┘
        ┌──────────────────────────────┐
        │ COMPARE THE CALCULATION RESULT WITH THE│────S83
        │ VIEWING HISTORY TO CORRECT BODILY │
        │       SENSATION QUALITY       │
        └──────────────────────────────┘
                │
                ▼
        ┌──────────────┐
        │     END      │────S84
        └──────────────┘
```

FIG. 17

```
        ┌──────────────┐
        │    START     │ ───── S90
        └──────┬───────┘
               │
               ▼
   ┌─────────────────────────┐
   │   ACCEPT THE HISTORY     │ ───── S91(S120)
   │ INFORMATION OF THE VIEWER│
   └───────────┬─────────────┘
               │
               ▼
 ┌────────────────────────────────────┐
 │    HOUSE THE ACCEPTED HISTORY       │ ───── S92(S121)
 │ INFORMATION INTO THE VIEWING HISTORY DB │
 └────────────────┬───────────────────┘
                  │
                  ▼
        ┌──────────────┐
        │     END      │ ───── S93
        └──────────────┘
```

# FIG. 18

POWER CONTROL DISPLACEMENT (RADIO QUALITY INDEX)

POWER REDUCTION REQUEST
(GOOD QUALITY)

QUALITY
REFERENCE
VALUE

(POOR QUALITY)
POWER INCREASE REQUEST

TIME

$f_0$    $f_1$    $f_2$    $f_3$    ........    $f_n$

OBSERVATION SECTION OR DATA TRAFFIC
RECEPTION SECTION

EP 2 833 625 A1

## FIG. 19A

POWER CONTROL DISPLACEMENT
(RADIO QUALITY INDEX)

## FIG. 19B

# FIG. 20

Picture Quality = PQ (perception quality) = ESTIMATED PERCEPTUAL OR SENSORY QUALITY OF THE VIEWER

$PQS_i = q(n) - PQS(n-1)$

$PQS(n) = PQS(n-1) + PQ$

$$PQ = \begin{cases} \alpha & : PQS_i > 1 \\ \alpha[1-(1-PQS_i)^n] & : 1 \geqq PQS_i \geqq 0 \\ -\beta[1-(1+PQS_i)^n] & : 0 > PQS_i \geqq -1 \\ -\beta & : PQS_i < -1 \end{cases}$$

(equation (4))

q(n) : PICTURE QUALITY PREDICTION VALUE AT frame (n) [PRESENT TIME POINT]

FIG. 21

# FIG. 22A

POWER CONTROL DISPLACEMENT
(RADIO QUALITY INDEX)

GOOD

$f(n)_{MAX}$

$\Delta f(n)_{max.-min.} = |\ f(n)_{min.} - f(n-1)_{max.}\ |$

$f(n)_{MIN}$

OBSERVATION
PERIOD

# FIG. 22B

POWER CONTROL
DISPLACEMENT
(RADIO QUALITY
INDEX)

GOOD

$f(n-1)$

$\Delta f(n) < 0$

$f(n)$

PERIOD

# FIG. 22C

POWER CONTROL
DISPLACEMENT
(RADIO QUALITY
INDEX)

GOOD

$f(n-1)$

$\Delta f(n) > 0$

$f(n)$

# FIG. 23

-5  -4  -3  -2  -1  0  +1  +2  +3  +4  +5

[-4]  [-3]  [-2]  [-1]  [0]  [+1]  [+2]  [+3]

# FIG. 24

ESTIMATED
QUALITY VALUE

"NORMAL"
(EVALUATION
VALUE: 4)

γ   VARIATION

"A LITTLE POOR"
(EVALUATION
VALUE: 3)

β   VARIATION

"INFERIOR"
(EVALUATION
VALUE: 2)

α   VARIATION

"WORST"
(EVALUATION
VALUE: 1)

COMPARISON

PAST
EVALUATION
VALUE "X"

# FIG. 25

EP 2 833 625 A1

# FIG. 26

QUALITY EVALUATION SERVER 200

FIG. 27

FIG. 28

# FIG. 29A

```
                    ┌──────────────┐
                    │    START     │───S100
                    └──────────────┘
                            │
                            ▼
    ┌────────────────────────────────────────┐
    │  REDUCTION OF ESTIMATED PERCEPTUAL      │───S101
    │  OR SENSORY QUALITY OF PREFERENTIAL     │
    │             SUBSCRIBER                   │
    └────────────────────────────────────────┘
                            │
                            ▼
    ┌────────────────────────────────────────┐
    │  CHANGE OR DELETION OF RESOURCE OR CONTROL │───S102
    │  OF NON-PREFERENTIAL SUBSCRIBER = α        │
    └────────────────────────────────────────┘
                            │
                            ▼
    ┌────────────────────────────────────────┐
    │  ADDITION OR CHANGE TO PREFERENTIAL     │───S103
    │  SUBSCRIBER BY AN AMOUNT OF α           │
    └────────────────────────────────────────┘
                            │
                            ▼
                    ┌──────────────┐
                    │     END      │───S104
                    └──────────────┘
```

# FIG. 29B

REQUEST
LEVEL

EQUIPPED CONTROL OR RESOURCE

# FIG. 29C

REQUEST     α (ADDITION)
LEVEL       →

α (DELETION)
←

EQUIPPED CONTROL OR RESOURCE

59

FIG. 30

500

BASE STATION

PERCEPTUAL OR SENSORY QUALITY EVALUATION PROCESSING UNIT ETC. — 550

511-1

TERMINAL

600

REPRODUCE CONTENT

USER CHANNEL CODING AND DECODING UNIT

RECEPTION/ INTERFERENCE POWER MEASUREMENT UNIT — 5311

SIR VALUE MEASUREMENT UNIT — 5312

TRANSMISSION AND RECEPTION POWER MEASUREMENT UNIT — 512

511-2

5361

TRANSMISSION POWER CONTROL UNIT

EP 2 833 625 A1

# FIG. 31

FROM OPERATION MANAGER ETC.

FROM INFORMATION PROVIDER

550

OPERATOR IF — 211

272 — INFORMATION PROVIDER IF

240

2082

RADIO QUALITY INFORMATION EXTRACTION PROCESSING UNIT

2086

RADIO QUALITY DISPLACEMENT DECISION PROCESSING UNIT

220

PERCEPTION QUALITY ESTIMATION PROCESSING UNIT

PERCEPUAL OR SENSEORY QUALITY EVALUATION PROCESSING UNIT

TO INFORMATION PROVIDER ETC.

BASE STATION IF — 207

551

EVALUATION RESULT REFLECTION PROCESSING UNIT

⊗ ☒

552

CIRCUIT IF

RECEIVED BASEBAND SIGNAL

FROM RECEPTION ANTENNA

INVERSE SPREADING — 511

RAKE SYNTHESIS — 512

513 — DECODING

514 — BLER MEASUREMENT

510 (520)

SIR MEASUREMENT

518

515 — TARGET BLER

516 ⊗

517 — TARGET SIR GENERATION

TO TRANSMISSION ANTENNA

523 — TPC CONTROL SIGNAL GENERATION

519 ⊗

521 ⊗

522 — QoS CONTROL

BASE STATION 500

# FIG. 32

EP 2 833 625 A1

# FIG. 33

EP 2 833 625 A1

FIG. 34

200

QUALITY EVALUATION SERVER

CONTENT SERVER INTERFACE — 201

MME INTERFACE — 205

BASE STATION/TERMINAL INTERFACE — 207

OPERATOR INTERFACE — 211

298 MEMORY

295 CPU

296 ROM

297 RAM

## INTERNATIONAL SEARCH REPORT

| International application No. |
| --- |
| PCT/JP2012/058261 |

A. CLASSIFICATION OF SUBJECT MATTER
*H04N7/173*(2011.01)i, *H04B7/26*(2006.01)i, *H04W88/12*(2009.01)i

According to International Patent Classification (IPC) or to both national classification and IPC

B. FIELDS SEARCHED

Minimum documentation searched (classification system followed by classification symbols)
H04N7/173, H04B7/26, H04W88/12

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2010-63004 A (NEC Corp.), 18 March 2010 (18.03.2010), | 1,2,5,11, 15-23 |
| A | paragraphs [0010] to [0012], [0018] to [0022], [0026] to [0074]; fig. 1 to 6 (Family: none) | 3,6-10 |
| Y | JP 2003-333577 A (Hewlett-Packard Co.), 21 November 2003 (21.11.2003), | 1,2,5,11, 15-23 |
| A | paragraphs [0019], [0044], [0050] to [0051], [0055], [0065] to [0084] & US 2005/0180415 A1 & EP 1482681 A1 & WO 2003/075526 A1 & CN 1640076 A | 3,6-10 |

☒ Further documents are listed in the continuation of Box C. ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 12 June, 2012 (12.06.12) | 26 June, 2012 (26.06.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

65

Form PCT/ISA/210 (continuation of second sheet) (July 2009)

**INTERNATIONAL SEARCH REPORT**

| International application No. |
|---|
| PCT/JP2012/058261 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-340050 A (NEC Corp.), 14 December 2006 (14.12.2006), paragraphs [0022] to [0036] & US 2009/0052330 A1 & EP 1887819 A1 & WO 2006/129792 A1 & CN 101189895 A | 15-20 |
| A | WO 2011/036947 A1 (Sony Corp.), 31 March 2011 (31.03.2011), all pages; all drawings & JP 2011-91784 A | 1-3,5-11, 15-23 |
| A | JP 2006-197421 A (Hitachi Communication Technology Co., Ltd.), 27 July 2006 (27.07.2006), all pages; all drawings & US 2006/0159044 A1 & CN 1809107 A | 1-3,5-11, 15-23 |
| A | JP 2009-212842 A (KDDI Corp.), 17 September 2009 (17.09.2009), all pages; all drawings (Family: none) | 1-3,5-11, 15-23 |
| A | JP 2011-176490 A (Fujitsu Ltd.), 08 September 2011 (08.09.2011), all pages; all drawings (Family: none) | 1-3,5-11, 15-23 |

**INTERNATIONAL SEARCH REPORT**

| International application No. |
| --- |
| PCT/JP2012/058261 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 4, 12-14
   because they relate to parts of the international application that do not comply with the prescribed requirements to such an extent that no meaningful international search can be carried out, specifically:
   See extra page.

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

(1) While it can be understood that the statement "when the difference of the maximum value and minimum value of quality for the wireless link in a predetermined period is a negative value" in claim 4 is referring to the "difference" from subtracting the "minimum value" (of quality) from the "maximum value" (of quality), it is not possible for the "difference of the maximum value and minimum value" to be a "negative value", hence, the meaning of the statement in claim 4 is significantly unclear.

Further, with respect to the "fluctuation range $\Delta f(n)$" which is the absolute value of the value gained from subtracting the maximum value $f(n)_{MAX}$ in the observation period of the quality index from the minimum value $f(n)_{MIN}$ according to paragraphs [0193]-[0199] of the description and Fig. 22 which are understood to correspond to the abovementioned matter in claim 4, the following statement (in paragraph [0198]) is made: "weighting is performed on a fluctuation value $\Delta f(n)$ such that the absolute value of the weighting value that is used is larger when the fluctuation range $\Delta f(n)$ is a negative value than when a positive value.

However, in the abovementioned statement, since the "fluctuation range $\Delta f(n)$" is the absolute value of the value gained from subtracting the maximum value $f(n)_{MAX}$ from the minimum value $f(n)_{MIN}$, a "negative value" is not possible.

Therefore, even when referring to the statements in the description, the content of the statement in claim 4 is significantly unclear from a technical standpoint, and the statements in the description corresponding to the matter in claim 4 are not technically accurate; thus, with regards to claim 4, an effective international search cannot be carried out on the basis of the description, the scope of the claims, or the drawings.

(2) In claim 12, there is a statement of "further provided with a collection processing unit which instructs the content server to collect the quality of the wireless link for the terminal which is to receive distribution," and paragraph [0106] of the description and Fig. 8 describe a "quality index collection processing unit 206" which corresponds to the "collection processing unit" of claim 12; however, there are no indications whatsoever in the abovementioned locations in the description concerning the matter of a "quality index collection processing unit 206" instructing the "content server" to collect the "quality of the wireless link" or the "quality index". Further, even when referring to other parts of the description or the drawings, there is no disclosure whatsoever concerning the matter of a "collection processing unit which instructs the content server to collect the quality of the wireless link".

Accordingly, the described matter in claim 12 is lacking sufficient support from the description or the drawings, so an effective international search cannot be carried out.

Further, there is also a similar lack of sufficient support from the description and the drawings concerning claims 13, 14 which cite claim 12, so an effective international search cannot be carried out.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006197421 A

**Non-patent literature cited in the description**

• Methodology for the subjective assessment of the quality of television pictures. *ITU-T BT500-11,* 07 June 2002